# EUROPEAN PATENT APPLICATION

(11) **EP 4 827 009 A1**
(43) Date of publication of application: **21.10.2026**
(21) Application number: 26702393.5
(22) Date of filing: 04.02.2026
(51) Int. Cl.: H04B 7/06, H04B 1/44, H04B 1/3827, H04B 17/318

(54) **ELECTRONIC DEVICE FOR SWITCHING SIGNAL-TRANSMITTING ANTENNA, AND OPERATING METHOD THEREOF**

(30) Priority: 27.02.2025 KR 20250026156; 28.04.2025 KR 20250055481
(71) Applicant: Samsung Electronics Co., Ltd, Suwon-si, Gyeonggi-do 16677 (KR)
(72) Inventor: KIM, Doheon, Suwon-si, Gyeonggi-do 16677 (KR); KIM, Sunyeop, Suwon-si, Gyeonggi-do 16677 (KR); LEE, Deokhee, Suwon-si, Gyeonggi-do 16677 (KR); JANG, Kyujae, Suwon-si, Gyeonggi-do 16677 (KR)
(74) Representative: Gulde & Partner
(86) International application number: PCT/KR2026/002022
(87) International publication number: WO 2026/182433

(57) **Abstract**

According to various embodiments, an electronic device and an operation method of the electronic device are provided. The electronic device may include a plurality of antennas including a first antenna, a second antenna, a third antenna, and a fourth antenna, first TRx circuitry electrically connected to the first antenna, first Rx circuitry electrically connected to the second antenna, second TRx circuitry electrically connected to the third antenna, second Rx circuitry electrically connected to the fourth antenna, memory storing a computer program including instructions, and at least one processor, wherein the instructions are configured to, when executed by the at least one processor, cause the electronic device to, while transmitting a signal and receiving a primary Rx signal via the first antenna and receiving a diversity Rx signal via the third antenna, identify the number of spatial streams in response to satisfying a condition in which Tx antenna switching using the first and third antennas is activated, in case that the number of spatial streams is equal to or less than a designated number, control the first Rx circuitry to receive the primary Rx signal via the second antenna and control the second Rx circuitry to receive the diversity Rx signal via the fourth antenna while performing the Tx antenna switching and, as the Tx antenna switching is completed, control the second TRx circuitry to transmit the signal and receive the primary Rx signal via the third antenna and control the first TRX circuitry to receive the diversity Rx signal via the first antenna, and in case that the number of the spatial streams exceeds the designated number, transmit, to a base station, a signal requesting to configure the number of the spatial streams to be equal to or less than the designated number, and as the number of the spatial streams is changed to be less than or equal to the designated number, control the first Rx circuitry to receive the primary Rx signal via the second antenna and control the second Rx circuitry to receive the diversity Rx signal via the fourth antenna while performing the Tx antenna switching.

## Description

### [Technical Field]

The disclosure relates to an electronic device and an operation method of the electronic device and, more particularly, to a technology of switching an antenna for outputting a signal.

### [Background Art]

To meet the demand for wireless data traffic having increased since deployment of 4G communication systems, efforts have been made to develop an improved 5G or pre-5G communication system. Therefore, the 5G or pre-5G communication system is also called a "beyond 4G network" communication system or a "post LTE" system. In order to accomplish higher data rates, the 5G communication system is considered to be implemented in ultrahigh frequency (mmWave) bands, (e.g., 6GHz or above bands), as well as in the bands used in LTE (6GHz or below bands). Beamforming, massive multiple-input multiple-output (massive MIMO), full dimensional MIMO (FD-MIMO), array antenna, analog beam forming, large scale antenna techniques are under discuss ion in the 5G communication system.

### [Disclosure of Invention]

### [Technical Problem]

Recently, the electronic device may support transmission (Tx) antenna switching, which may enhance signal transmission performance. Tx antenna switching may refer to a technology for switching an antenna for outputting a signal among multiple antennas implemented in an electronic device.

An electronic device supporting Tx antenna switching may transmit a transmission signal through multiple antennas in various directions, may increase the probability that a cellular network receives the transmission signal, and may implement transmission performance improvement of the transmission signal.

However, the electronic device may need to switch an antenna for transmitting a transmission signal when performing Tx antenna switching, and the switching of the antenna for transmitting a transmission signal may cause reconfiguration of a TRx circuit electrically connected to the antenna, and the reconfiguration of the TRx circuit may cause a time during which transmission of a transmission signal is impossible (e.g., a Tx blanking time) and a time during which reception of a reception signal is impossible (e.g., an Rx blanking time).

Particularly, the electronic device is unable to receive control data transmitted by the cellular network during a time during which the reception of a reception signal is impossible, and the failure to receive the control data may cause a decrease in data throughput and/or a degradation in the quality of the service through cellular communication.

The technical tasks to be achieved in this document may not be limited to the technical tasks mentioned above, and other technical tasks which are not mentioned herein may be clearly understood from the following description by those skilled in the art to which the disclosure pertains.

### [Solution to Problem]

An electronic device, a computer-readable recording medium and an operation method of an electronic device is provided in the independent claims.

An electronic device according to an embodiment may comprise a plurality of antennas including at least a first antenna, a second antenna, a third antenna, and a fourth antenna. The electronic device may include first TRx circuitry electrically connected to the first antenna. The electronic device may include first Rx circuitry electrically connected to the second antenna. The electronic device may include second TRx circuitry electrically connected to the third antenna. The electronic device may include second Rx circuitry electrically connected to the fourth antenna. The electronic device may include memory that stores a computer program including instructions. The electronic device may include at least one processor. The instructions, when executed by the at least one processor, may cause the electronic device to, while transmitting a signal and receiving a primary Rx signal via the first antenna and receiving a diversity Rx signal via the third antenna, identify the number of spatial streams in response to satisfying a condition in which Tx antenna switching using the first and third antennas is activated. The instructions, when executed by the at least one processor, may cause the electronic device to, in case that the number of the spatial streams is equal to or less than a designated number, control the first Rx circuitry to receive the primary Rx signal via the second antenna and control the second Rx circuitry to receive the diversity Rx signal via the fourth antenna while performing the Tx antenna switching. The instructions, when executed by the at least one processor, may cause the electronic device to, in case that the number of the spatial streams is less than or equal to the designated number, as the Tx antenna switching is completed, control the second TRx circuitry to transmit the signal and receive the primary Rx signal via the third antenna and control the first TRx circuitry to receive the diversity Rx signal via the first antenna. The instructions, when executed by the at least one processor, may cause the electronic device to, in case that the number of the spatial streams exceeds a designated number, transmit, to a base station, a signal requesting to configure the number of the spatial streams to be equal to or less than the designated number. The instructions, when executed by the at least one processor, may cause the electronic device to, in case that the number of the spatial streams exceeds the designated number, as the number of the spatial streams is changed to be equal to or less than the designated number, control the first Rx circuitry to receive the primary Rx signal via the second antenna and control the second Rx circuitry to receive the diversity Rx signal via the fourth antenna while performing the Tx antenna switching.

In a computer-readable recording medium storing instructions that, when executed by at least one processor of an electronic device, cause the electronic device to perform Tx antenna switching using a plurality of antennas including a first antenna, a second antenna, a third antenna, and a fourth antenna, according to an embodiment, the instructions, when executed by the at least one processor, may cause the electronic device to, while transmitting a signal and receiving a primary Rx signal via the first antenna and receiving a diversity Rx signal via the third antenna, identify the number of spatial streams in response to satisfying a condition in which Tx antenna switching is activated. The instructions, when executed by the at least one processor, may cause the electronic device to, in case that the number of the spatial streams is equal to or less than a designated number, control first Rx circuitry electrically connected to the second antenna to receive the primary Rx signal via the second antenna and control second Rx circuitry electrically connected to the fourth antenna to receive the diversity Rx signal via the fourth antenna while performing the Tx antenna switching. The instructions, when executed by the at least one processor, may cause the electronic device to, in case that the number of spatial streams is less than or equal to the designated number, as the Tx antenna switching is completed, control first TRx circuitry electrically connected to the first antenna to receive the diversity Rx signal via the first antenna and control second TRx circuitry electrically connected to the third antenna to transmit the signal and receive the primary Rx signal via the third antenna. The instructions, when executed by the at least one processor, may cause the electronic device to, in case that the number of the spatial streams exceeds a designated number, transmit, to the base station, a signal requesting to configure the number of spatial streams to be the designated number. The instructions, when executed by the at least one processor, may cause the electronic device to, in case that the number of spatial streams exceeds the designated number, as the number of spatial streams of a signal received from the base station is changed to the designated number, control the first Rx circuitry to receive the primary Rx signal via the second antenna and control the second Rx circuitry to receive the diversity Rx signal via the fourth antenna while performing the Tx antenna switching.

An operation method of an electronic device according to an embodiment may include, while transmitting a signal and receiving a primary Rx signal via a first antenna and receiving a diversity Rx signal via a third antenna, identifying the number of spatial streams in response to satisfying a condition in which Tx antenna switching is activated. The operation method of the electronic device may include, in case that the number of spatial streams is equal to or less than a designated number, controlling first Rx circuitry electrically connected to a second antenna to receive the primary Rx signal via the second antenna and controlling second Rx circuitry electrically connected to a fourth antenna to receive the diversity Rx signal via the fourth antenna while performing the Tx antenna switching. The operation method of the electronic device may include, in case that the number of spatial streams is equal to or less than a designated number and, as the Tx antenna switching is completed, controlling first TRx circuitry electrically connected to the first antenna to receive the diversity Rx signal via the first antenna and controlling second TRx circuitry electrically connected to the third antenna to transmit the signal and receive the primary Rx signal via the third antenna. The operation method of the electronic device may include, in case that the number of the spatial streams exceeds a designated number, transmitting, to a base station, a signal requesting to configure the number of the spatial streams to be the designated number. The operation method of the electronic device may include, in case that the number of the spatial streams exceeds a designated number, as the number of spatial streams of a signal received from the base station is changed to the designated number, controlling the first Rx circuitry to receive the primary Rx signal via the second antenna and controlling the second Rx circuitry to receive the diversity Rx signal via the fourth antenna while performing the Tx antenna switching.

### [Advantageous Effects of invention]

An electronic device and an operation method of the electronic device according to an embodiment may be configured such that, while performing Tx antenna switching, the electronic device receives a primary Rx signal through an antenna adjacent to an antenna used for transmission of a signal and reception of the primary Rx signal, and receives a diversity Rx signal through an antenna adjacent to an antenna used for reception of a diversity Rx signal. The electronic device may prevent a situation (e.g., Rx blanking) in which a signal is not received from the cellular network while performing Tx antenna switching, and may prevent a situation in which the control data transmitted by the cellular network is not received, thereby preventing the degradation of the quality of the cellular communication and/or a service using the cellular communication.

In the electronic device and the operation method of the electronic device according to an embodiment, the number of spatial streams of a signal received from a cellular network may be identified prior to performing Tx antenna switching and, when the number of spatial streams is equal to or greater than (or exceeds) a designated number, a signal requesting reduction of the number of spatial streams may be transmitted to the cellular network. The electronic device may ensure an antenna capable of receiving a primary Rx signal and a diversity Rx signal during the performance of the Tx antenna switching, by reducing the number of spatial streams. Therefore, during Tx antenna switching, the electronic device may avoid a situation in which no signal is received from the cellular network (e.g., Rx blanking), and may prevent a situation in which control data transmitted by the cellular network is not received, thereby preventing a degradation in the quality of cellular communication and/or a service using cellular communication.

An electronic device and an operation method of the electronic device according to an embodiment may have reduced power consumption, wherein switching to an antenna with a better field (stronger RF reception sensitivity) allows for relatively lower Tx Power transmission, reducing PA (Power Amplifier) power consumption and extending battery life.

An electronic device and an operation method of the electronic device according to an embodiment may have improved communication performance, wherein selecting a Tx antenna with a better environment enhances communication performance.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 is a block diagram of an electronic device for supporting at least one network communication according to an embodiment.
FIG. 2 illustrates an example in which an electronic device performs Tx antenna switching, according to an embodiment.
FIG. 3 illustrates a situation in which an electronic device fails to receive a signal transmitted by a cellular network while performing Tx antenna switching, according to an embodiment.
FIG. 4 is a block diagram of an electronic device according to an embodiment.
FIG. 5A illustrates an example in which an electronic device transmits a signal and receives a primary Rx signal through a first antenna, and receives a diversity Rx signal through a third antenna, according to an embodiment.
FIG. 5B illustrates an example in which an electronic device receives a primary Rx signal through a second antenna and a diversity Rx signal through a fourth antenna while performing Tx antenna switching, according to an embodiment.
FIG. 5C illustrates an example in which, as Tx antenna switching is completed, an electronic device receives a diversity Rx signal through a first antenna, and transmits a signal and receives a primary Rx signal through a third antenna.
FIG. 6 illustrates an example in which an electronic device controls an RFIC to receive a primary Rx signal through a second antenna and receives a diversity Rx signal through the fourth antenna while performing Tx antenna switching, according to an embodiment.
FIG. 7A illustrates an example in which an electronic device transmits a signal and receives a primary Rx signal through a first antenna, and receives a diversity Rx signal through a third antenna.
FIG. 7B illustrates an example in which an electronic device receives a primary Rx signal through a first antenna and receives a diversity Rx signal through a third antenna while performing Tx antenna switching.
FIG. 7C illustrates an example in which, as Tx antenna switching is completed, a diversity Rx signal is received through a first antenna, and a signal is transmitted and a primary Rx signal is received through a third antenna.
FIG. 8A illustrates an example in which an electronic device transmits a signal to a cellular network, based on a signal received while performing Tx antenna switching, according to an embodiment.
FIG. 8B illustrates an example in which an electronic device transmits a signal to a cellular network, based on a signal received while performing Tx antenna switching, according to an embodiment
FIG. 9 is an operational flowchart illustrating an operation method of an electronic device according to an embodiment.
FIG. 10 is an operational flowchart illustrating an operation method of an electronic device according to an embodiment.

### [Mode for the Invention]

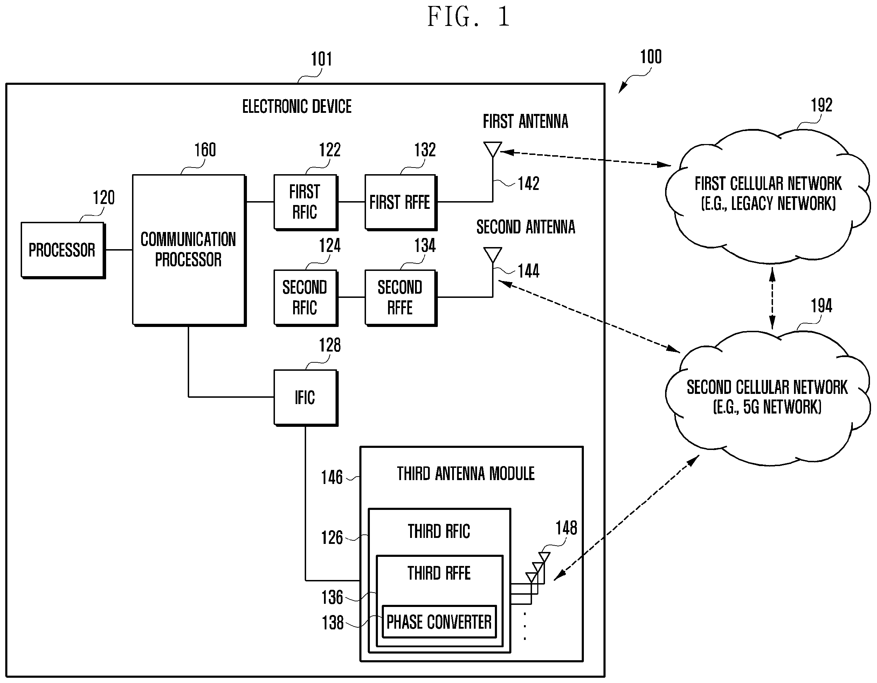

FIG. 1 is a block diagram 100 of an electronic device 101 for supporting at least one network communication according to an embodiment. The electronic device 101 may comprise, for example, a portable device (e.g., a smartphone, a tablet PC, a portable multimedia device, a portable medical device, a camera, or a wearable device), a computer, or a home appliance. The electronic device 101 according to an embodiment of the disclosure is not limited to the above-described devices.

Referring to FIG. 1, the electronic device 101 may comprise a processor 120, a communication processor 160, a first radio frequency integrated circuit (RFIC) 122, a second RFIC 124, a third RFIC 126, an intermediate frequency integrated circuit (IFIC) 128, a first radio frequency front end (RFFE) 132, a second RFFE 134, a third RFFE 136, a phase shifter 138, a plurality of antennas 148, a first antenna 142, a second antenna 144 and/or an antenna module 146.

The antenna module 146 may comprise a third RFIC 126 and/or a plurality of antennas 148. The third RFIC 126 may comprise a third RFFE 136 including a phase shifter 138, but the disclosure is not limited thereto. The third RFIC 126, the third RFFE 136, the phase shifter 138, and/or the plurality of antennas 148 may be implemented to be included in or mounted on a separate module or substrate.

The processor 120 may be implemented, for example, as an application processor and may execute an application stored in the electronic device 101. The processor 120 and the communication processor 160 may transmit and/or receive data through an interface. The processor 120 may provide at least a portion of data generated by the application to the communication processor 160. The communication processor 160 may provide at least a portion of data received from a network (e.g., a first cellular network 192 and/or a second cellular network 194) to the processor 120, and the processor 120 may utilize the received data to execute the application.

The communication processor 160 may be implemented as a single chip (or a single package) together with the processor 120, depending on implementations, but it is only of an example and may be implemented as independent hardware. When the communication processor 160 is implemented as a chip (or package), the chip (or package) may include a storage device (e.g., a memory) storing protocol information for communication with a legacy network (e.g., long term evolution (LTE) protocol information), protocol information for communication with a 5G network (e.g., New Radio (NR) protocol information), and/or protocol information for communication with a beyond 5G communication network (e.g., 6G network). For example, the communication processor 160 may use a plurality of protocol stacks to perform multiple radio access technology-dual connectivity (MR-DC) or dual subscriber identification module (SIM) service. The communication processor 160 may support establishment of a communication channel in a band to be used for wireless communication with the first cellular network 192, and legacy network communications through the established communication channel. According to various embodiments, the first cellular network 192 may be a legacy network including second generation (2G), third generation (3G), fourth generation (4G), and/or LTE networks. The communication processor 160 may support establishment of a communication channel corresponding to a designated band (e.g., frequency range (FR) 1 (e.g., 410 MHz (megahertz) to 7.125 GHz (gigahertz), although not limited thereto) (or sub 6), and/or FR 2 (e.g., 24.25 GHz to 71 GHz, although not limited thereto) (or above 6), amongst bands to be used for wireless communication with the second cellular network 194, and 5G network communications through the established communication channel. The second cellular network 194 may be, for example, a 5G network, but is not limited thereto. For example, the second cellular network 194 may be a beyond 5G communication network (e.g., 6G network). The communication processor 160 may operate based on information (or instructions) associated with an LTE (e.g., evolved universal mobile telecommunication system (UMTS) terrestrial radio access network (E-UTRA), evolved packet core (EPC), and/or evolved packet system (EPS), although not limited thereto) protocol stack, stored in an internal memory (or an accessible memory). The communication processor 160 may operate based on information (or instructions) associated with a 5G (e.g., NR, 5th generation core (5GC), and/or 5th generation system (5GS), although not limited thereto) protocol stack, stored in an internal memory (or accessible memory). The communication processor 160 may generate a baseband signal based on data from the processor 120. The communication processor 160 may provide the processor 120 with data obtained by processing the baseband signal received from the first RFIC 122, the second RFIC 124, and/or the IFIC 128. The electronic device 101 may perform communication based on dual connectivity. For example, the electronic device 101 may perform communications using an LTE network and a 5G network, based on heterogeneous radio access technology (RAT), for example, E-UTRA NR dual connectivity (ENDC). For example, the electronic device 101 (e.g., the communication processor 160) may perform dual connectivity communication based on FR1 and FR2 of NR, which may be one RAT. Meanwhile, there is no limitation in the type of dual connectivity, and at least some of the above-described components may be implemented not to be included in the electronic device 101, depending upon the type of the dual connectivity.

For transmission, the first RFIC 122 may convert a baseband signal generated by the communication processor 160 into a radio frequency (RF) signal in a first frequency band (e.g., about 700 MHz to about 3 GHz). For reception, the first RFFE 132 may receive an RF signal in the first frequency band via the first antenna 142 and preprocess the received RF signal to provide the preprocessed RF signal to the first RFIC 122. The first RFIC 122 may convert the preprocessed RF signal into a baseband signal so as to be processed by the communication processor 160.

For transmission, the second RFIC 124 may convert a baseband signal generated by the communication processor 160 into an RF signal in a second frequency band (for example, FR 1 (e.g., a frequency band of about 7.125 GHz or less)). For reception, the second RFFE 134 may receive an RF signal in the second frequency band via an antenna (e.g., the second antenna 144) and preprocess the received RF signal to provide the preprocessed signal to the second RFIC 124. The second RFIC 124 may convert the preprocessed RF signal in the second frequency band into a baseband signal so as to be processed by the communication processor 160. The first RFIC 122 and the second RFIC 124 may be implemented as two or more independent chips (or a plurality of packages), or may be implemented as a single chip (or a single package). The first RFIC 122, the second RFIC 124, the first RFFE 132, and/or the second RFFE 134 may include a plurality of power amplifiers (PAs), low noise amplifiers (LNAs), filters, multiplexers, and/or switches, for supporting a plurality of RF paths (e.g., an RF transmit path and/or an RF receive path).

For transmission, the third RFIC 126 may convert a baseband signal generated by the communication processor 160 into an RF signal in a third frequency band (e.g., a frequency band of about 24.25 GHz or more). For reception, the third RFFE 136 may receive an RF signal in the third frequency band through an antenna (e.g., a plurality of antennas 148) and preprocess the received RF signal. The third RFIC 126 and/or the IFIC 128 may convert the preprocessed RF signal in the third frequency band into a baseband signal so as to be processed by the communication processor 160. According to an embodiment, the third RFFE 136 may be configured as a part of the third RFIC 126. In various embodiments, the third RFIC 126 may transmit and/or receive a signal to and/or from the communication processor 160. For example, when communication is performed based on the dual connectivity of FR1 and FR2, the second RFIC 124 and the second RFFE 134 may be used to process signals in the FR1 band, and the third RFIC 126 and the IFIC 128 may be used to process signals in the FR2 band, although the disclosure is not limited thereto.

According to an embodiment, the electronic device 101 may include the IFIC 128 separately from the third RFIC 126 or as at least part thereof. For example, the IFIC 128 may convert a baseband signal generated by the communication processor 160 into an RF signal in an intermediate frequency band (e.g., about 9 GHz to about 11 GHz) (hereinafter, referred to as 'IF signal') and then may transfer the IF signal to the third RFIC 126. The third RFIC 126 may convert the IF signal into an RF signal in a third frequency band. For reception, the third RFIC 126 may receive the RF signal in the third frequency band via an antenna (e.g., a plurality of antennas 148) and then convert the received RF signal into an IF signal to provide the converted signal to the IFIC 128. The IFIC 128 may convert the IF signal into a baseband signal so that the communication processor 160 may process the signal. In various embodiments, the IFIC 128 may transmit and/or receive a signal to and/or from the communication processor 160. The RFICs (122, 124, 126) and/or the IFIC 126 may include at least one mixer (e.g., a mixer performing up-conversion of frequency and/or a mixer performing down-conversion of frequency).

A plurality of antennas 148 may be formed as an antenna array including a plurality of antenna elements capable of being used for beamforming. In such a circumstance, the third RFIC 126, for example, as a part of the third RFFE 136, may include a plurality of phase shifters 138 corresponding to the plurality of antenna elements. For transmission, the plurality of phase shifters 138 may shift a phase of each RF signal in the third frequency band to be transmitted to the outside (e.g., a base station of a 5G network) of the electronic device 101 through an antenna element corresponding to each of the plurality of phase shifters 138. For reception, the plurality of phase shifters 138 may shift a phase of each RF signal in the third frequency band received from the outside into the same phase or substantially the same phase through an antenna element corresponding to each of the plurality of phase shifters 138. According to an embodiment, the electronic device 101 may include a plurality of antenna modules 146. The electronic device 1101) may selectively use some of the plurality of antenna modules 146 or may use the entirety of the plurality of antenna modules 146.

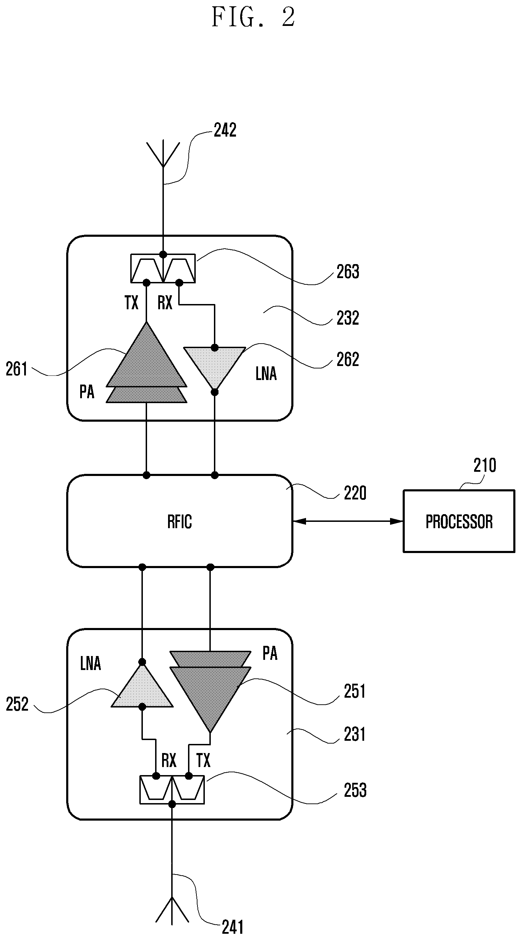

FIG. 2 illustrates an example in which an electronic device performs Tx antenna switching according to an embodiment.

Referring to FIG. 2, an electronic device (e.g., the electronic device 101 of FIG. 1) may include a processor 210 (e.g., the communication processor 160 of FIG. 1), an RFIC 220 (e.g., the first RFIC 122 and the second RFIC 124 of FIG. 1), a first TRx circuit 231 (e.g., the first RFFE 132 of FIG. 1), a second TRx circuit 232 (e.g., the second RFFE 134 of FIG. 1), a first antenna 241 (e.g., the first antenna 142 of FIG. 1), and a second antenna 242 (e.g., the first antenna 142 of FIG. 1).

According to an embodiment, the processor 210 may perform various operations for wireless communication on a cellular network. The processor 210 may establish a communication channel of a band used for wireless communication with the cellular network and support wireless communication through the established communication channel. Wireless communication on the cellular network may be referred to as cellular communication. Cellular communication may include at least one of 3rd generation (3G) cellular communication, 4th generation (4G) cellular communication, and 5th generation (5G) cellular communication. The processor 210 may be referred to as a communication processor. The processor 210 may generate a baseband signal including data to be transmitted and may transmit the same to the RFIC 220. The processor 210 may determine whether to activate Tx hopping. According to an example, the processor 210 may determine to activate the Tx hopping when the electronic device 101 is located in a weak electric field area, when the electronic device 101 is located in an area where a variation in field quality is large, and/or when the electronic device 101 is in contact with (or gripped by) an external object. Upon determining to activate Tx hopping, the processor 210 may perform operations related to Tx hopping.

According to an embodiment, the RFIC 220 may perform various operations for processing a signal received from the processor 210. The RFIC 220 may perform a modulation operation on a signal received from the processor 210. For example, the RFIC 220 may perform a frequency modulation operation of converting a baseband signal received from the processor 311 into a frequency band (e.g., an RF band) used for cellular communication. The RFIC 220 may transmit (or provide) a signal (e.g., an RF signal) generated by modulating a baseband signal to a port assigned by the processor 210. Alternatively, the RFIC 220 may perform a demodulation operation on a signal received from the outside. For example, the RFIC 220 may perform a frequency demodulation operation of converting a radio frequency (RF) signal to a baseband signal.

According to an embodiment, the first TRx circuit 231 may include one or more RFFEs (e.g., the first RFFE 132 of FIG. 1). The first TRx circuit 231 may be electrically connected to the first antenna 241. The first TRx circuit 231 may include a switch capable of electrically connecting the first antenna 241 and at least one component (e.g., a filter 253 for separating a transmission signal and a reception signal, an amplifier 251 for amplifying the transmission signal, and a low-noise amplifier 252 for amplifying the received signal) included in the first TRx circuit 231.

According to an embodiment, the first TRx circuit 231 may include an amplifier 251 which amplifies a signal received from the RFIC 220, a low-noise amplifier 252 which amplifies a signal received via the first antenna 241, and a filter 253 which may separate a transmission signal and/or a reception signal.

According to an embodiment, the second TRx circuit 232 may include one or more RFFEs (e.g., the second RFFE 134 of FIG. 1). The second TRx circuit 232 may be electrically connected to the second antenna 242. The second TRx circuit 232 may include a switch capable of electrically connecting the second antenna 242 and at least one component (e.g., a filter 263, an amplifier 261, a low-noise amplifier 262) included in the second TRx circuit 232.

According to an embodiment, the second TRx circuit 232 may include an amplifier 261 for amplifying a signal received from the RFIC 220, a low-noise amplifier 262 for amplifying a signal received through the second antenna 242, and a filter 263 for separating a transmission signal and/or a reception signal.

According to an embodiment, the electronic device 101 may activate Tx antenna switching by various causes. Tx antenna switching may refer to an operation of switching an antenna for outputting a transmission signal. According to an example, the electronic device 101 supporting Tx antenna switching may switch from outputting a transmission signal through the first antenna 241 to outputting the transmission signal through the second antenna 242, according to activation of the Tx antenna switching. According to an example, the electronic device 101 that performs Tx antenna switching may output a transmission signal through the first antenna 241 for a designated period of time. After the designated period of time, the electronic device 101 may output the transmission signal through the second antenna 242 for another designated period of time.

According to an embodiment, the electronic device 101 that performs Tx antenna switching may output a transmission signal through at least one antenna among the multiple antennas, and may transmit the transmission signal in various directions, thereby implementing improved output performance of the transmission signal. The electronic device 101 may perform Tx antenna switching when the electronic device 101 satisfies a specified condition. According to an example, the specified condition may include at least one of a condition in which the electronic device 101 is located in a weak electric field area, a condition in which a variation in the quality of a signal received by the electronic device 101 is greater than or equal to a designated value, and a condition in which the electronic device 101 detects that it is being gripped. The above-described condition is only an example, and the electronic device 101 may perform Tx antenna switching in case of satisfying various conditions.

According to an embodiment, the electronic device 101 may perform an operation of switching an antenna to output a transmission signal, as part of an operation of performing Tx antenna switching. Switching of the antenna for outputting a transmission signal may require a configuration for outputting a signal by the first TRx circuit 231 and/or the second TRx circuit 232.

According to an example, in case that the electronic device 101 outputs a transmission signal through the first antenna 241 for a designated period of time, the electronic device 101 may control the first TRx circuit 231 to cause the first antenna 241 to output a transmission signal and/or receive a primary receiver signal. The electronic device 101 may control the first TRx circuit 231 to cause the first antenna 241 to output a transmission signal and/or receive a primary receiver signal, and may control the second TRx circuit 232 to cause the second antenna 242 to receive a diversity receiver signal.

According to an example, the electronic device 101 may control the second TRx circuit 232 to cause the second antenna 242 to output a transmission signal and receive a primary receiver signal (PRx) after a designated time expires after outputting the transmission signal through a first antenna 241. The electronic device 101 may control the second TRx circuit 232 to cause the second antenna 242 to output a transmission signal and/or receive a primary receiver signal, while controlling the first TRx circuit 231 to cause the first antenna 241 to receive a diversity receiver signal.

According to an example, by performing switching of the antenna for outputting the transmission signal, the first TRx circuit 231 and/or the second TRx circuit 232 may experience a time required for a configuration for the antenna switching. The electronic device 101 may have difficulty in transmitting a transmission signal and/or receiving a reception signal during a time required for the configuration of the first TRx circuit 231 and/or the second TRx circuit 232.

According to an example, a time period during which transmission of a transmission signal is difficult or impossible may be referred to as a Tx blanking time, and a time period during which reception of a reception signal is difficult or impossible may be referred to as an Rx blanking time. The electronic device 101 may be unable to output the transmission signal during a Tx blanking time caused by switching of an antenna for outputting the transmission signal, and may be unable to receive a reception signal during a Rx blanking time caused by switching of an antenna for outputting the transmission signal.

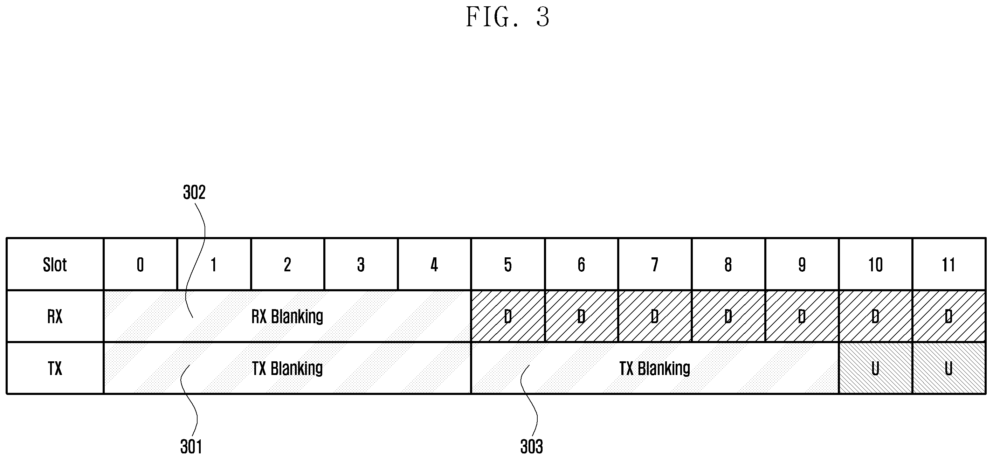

According to an example, in a case that a cellular network (e.g., the first cellular network 192 or the second cellular network 194 of FIG. 1) connected to the electronic device 101 transmits control data (e.g., control data transmitted through a physical downlink shared control channel (PDSCH), or downlink control information (DCI)) related to the transmission of a transmission signal during the Rx blanking time, the electronic device 101 may fail to receive the control data, and the failure to receive the control data may reduce the data throughput, and may cause a degradation of the quality of a service through the cellular communication. According to an example, the situation in which reception of control data is difficult during the Rx blanking time may further increase the length of time during which transmission of a transmission signal is impossible or difficult. For example, a situation in which it is difficult to receive control data during Rx blanking time may cause the length of a time during which transmission of a transmission signal is impossible or difficult to be increased. Specific details will be described later with reference to FIG. 3.

FIG. 3 illustrates a situation in which an electronic device fails to receive a signal transmitted by a cellular network while performing a transmission (Tx) antenna switching, according to an embodiment.

As described above with reference to FIG. 2, as an antenna for outputting the transmission signal is switched, a first TRx circuit (e.g., the first TRx circuit 231 of FIG. 2) and/or a second TRx circuit (e.g., the second TRx circuit 232 of FIG. 2) may require a predetermined configuration time.

The electronic device 101 may have difficulty in outputting a transmission signal and/or receiving a reception signal during the configuration time required for the first TRx circuit 231 and/or the second TRx circuit 232.

According to an example, a time period during which transmission of a transmission signal is difficult or impossible may be referred to as a Tx blanking time, and a time period during which reception of a reception signal is difficult or impossible may be referred to as an Rx blanking time. The electronic device 101 may be unable to output a transmission signal during a Tx blanking time caused by switching of an antenna for outputting the transmission signal, and may be unable to output a reception signal during an Rx blanking time caused by switching of an antenna for outputting the transmission signal.

Referring to FIG. 3, the electronic device 101 may not transmit a signal during a time corresponding to a designated number of slots (e.g., slot 0, slot 1, slot 2, slot 3, and slot 4) according to activation of the Tx antenna switching. The time corresponding to a designated number of slots may be referred to as a Tx blanking time 301.

The electronic device 101, according to activation of the Tx antenna switching, may not receive a signal during a time corresponding to a designated number of slots (e.g., slot 0, slot 1, slot 2, slot 3, slot 4). A time corresponding to a designated number of slots may be referred to as an Rx blanking time 302.

According to an example, when the cellular network (e.g., the first cellular network 192 or the second cellular network 194 of FIG. 1) connected to the electronic device 101 transmits control data (e.g., control data transmitted through a physical downlink shared control channel (PDSCH) or downlink control information (DCI)) associated with the transmission of a transmission signal during an Rx blanking time 302, the electronic device 101 may fail to receive the control data. Failure to receive the control data may cause a situation in which the electronic device 101 is unable to transmit the transmission signal for a predetermined time period 303 even after a Tx blanking time 301. Furthermore, the electronic device 101 may not be able to transmit a message (e.g., ACK or NACK) indicating whether data received prior to the Rx blanking time 302 has been received, during the Tx blanking time 301. In case that the electronic device 101 fails to transmit a message (e.g., ACK) indicating that data received before the Rx blanking time 302 has been received, even though the data received before the Rx blanking time 302 has been correctly received, the data received before the Rx blanking time 302 may need to be received again.

According to an example, the length of the Tx blanking time 301 and/or the Rx blanking time 302 may vary according to the type of a cellular network (e.g., LTE, E-UTRA-NR dual connectivity (EN-DC), new radio standalone (NR SA)) used by the electronic device 101. For example, in case that the electronic device 101 is connected to a cellular network supporting LTE, the length of the Tx blanking time 301 and/or the Rx blanking time 302 may be about 2 ms. As another example, in case that the electronic device 101 is connected to a cellular network supporting NR SA, the length of the Tx blanking time 301 and/or the Rx blanking time 302 may be about 5 ms. For example, when the electronic device 101 is connected to a cellular network supporting EN-DC, the length of the Tx blanking time 301 and/or the Rx blanking time 302 may be about 11 ms. When connected to a cellular network supporting EN-DC, the electronic device 101 may experience a relatively longer Tx blanking time 301 and/or Rx blanking time 302 as compared with connections to other cellular networks, resulting in greater degradation in cellular communication performance.

According to an example, when the electronic device 101 performs Tx antenna switching to improve the cellular communication performance, a situation may occur in which reception of control data cannot be performed during the Rx blanking time 302, and as the time periods 301 and 303 during which a signal cannot be transmitted become longer, the cellular communication performance may accordingly deteriorate. Hereinafter, an example in which, while the electronic device 101 is performing Tx antenna switching, the electronic device 101 is configured to receive a reception signal, to cause the length of the Rx blanking time 302 is reduced and/or the Rx blanking time 302 is eliminated, and the performance of the cellular communication is improved, will be described.

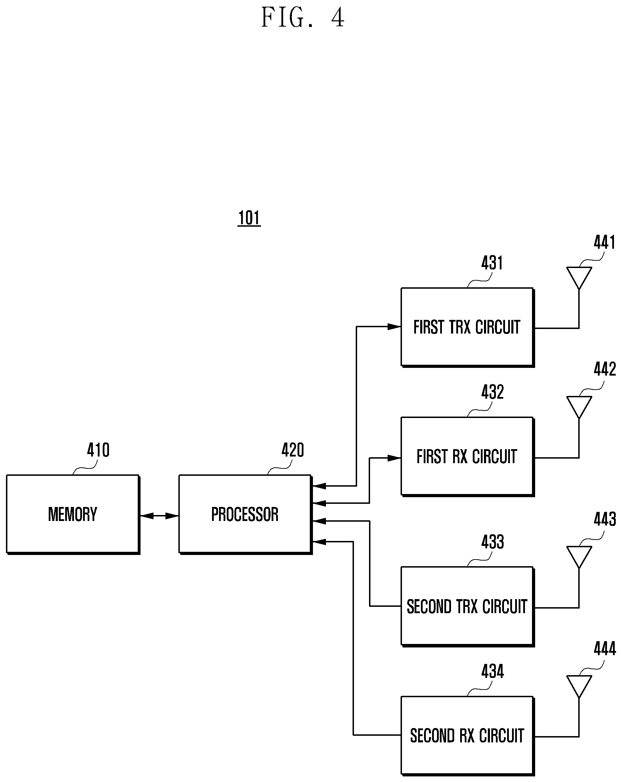

FIG. 4 is a block diagram of an electronic device according to an embodiment.

Referring to FIG. 4, an electronic device (e.g., the electronic device 101 of FIG. 1) may include a memory 410, a processor 420 (e.g., the communication processor 160 of FIG. 1), a first TRx circuit 431 (e.g., the first RFFE 132 of FIG. 1), a first Rx circuit 432, a second TRx circuit 433 (e.g., the first RFFE 132 of FIG. 1), a second Rx circuit 434, and a plurality of antennas including a first antenna 441 (e.g., the first antenna 142 of FIG. 1), a second antenna 442 (e.g., the first antenna 142 of FIG. 1), a third antenna 443 (e.g., the second antenna 144 of FIG. 1), a fourth antenna 444 (e.g., the second antenna 144 of FIG. 1). The first TRx circuit 431 may also be identified as the first TRx circuitry, the first Rx circuit 432 may also be identified as the first Rx circuitry, the second TRx circuit 433 may also be identified as the second TRx circuitry and the second Rx circuit 434 may also be identified as the second Rx circuitry.

According to an example, the processor 420 may perform various operations for wireless communication on a cellular network. The processor 420 may be used to establish a communication channel of a band used for wireless communication with a cellular network and to support wireless communication through the established communication channel. Wireless communication on a cellular network may be referred to as cellular communication. The cellular communication may include at least one of 3rd generation cellular communication, 4th generation cellular communication, and/or 5th generation cellular communication. The processor 410 may be referred to as a communication processor.

According to an example, the memory 410 may store a computer program including instructions executable by the processor 420. The operation of the processor 420 described hereinafter may be performed by executing instructions stored in the memory 410.

According to an example, the first TRx circuit 431 may include one or more RFFEs (e.g., the first RFFE 132 of FIG. 1). The first TRx circuit 431 may be electrically connected to the first antenna 441. The first TRx circuit 431 may include a switch capable of electrically connecting the first antenna 441 and at least one component (e.g., a multiplexer, an amplifier, a low-noise amplifier) included in the first TRx circuit 431.

According to an example, the first Rx circuit 432 may include one or more RFFEs (e.g., the first RFFE 132 of FIG. 1). The first Rx circuit 432 may be electrically connected to the second antenna 442. The first Rx circuit 432 may include at least one component (e.g., a low-noise amplifier) for processing a reception signal. The first Rx circuit 432 may be a circuit for receiving a signal, and may not include components related to transmission of a signal.

The first antenna 441 and the second antenna 442 may be antennas disposed adjacent to each other. According to an example, the first antenna 441 and the second antenna 442 may be disposed at the top of the electronic device 101. The first antenna 441 and the second antenna 442 being disposed adjacent to each other may refer to a channel state estimated through the first antenna 441 and a channel state estimated through the second antenna 442 being substantially identical (or similar). Therefore, the processor 420 may use the channel state (channel estimation) estimated using the first antenna 441 to receive a signal through the second antenna 442. Alternatively, the processor 420 may use the channel state estimated using the second antenna 442 to transmit and/or receive a signal through the first antenna 441.

According to an example, the second TRx circuit 433 may include one or more RFFEs (e.g., the first RFFE 132 of FIG. 1). The second TRx circuit 433 may be electrically connected to the third antenna 443. The second TRx circuit 433 may include a switch capable of electrically connecting the third antenna 443 and at least one component (e.g., a multiplexer, an amplifier, a low-noise amplifier) included in the first TRx circuit 431.

According to an example, the second Rx circuit 434 may include one or more RFEFs (for example, the first RFFE 132 of FIG. 1). The second Rx circuit 434 may be electrically connected to the fourth antenna 444. The second Rx circuit 434 may include at least one component (e.g., a low-noise amplifier) for processing a reception signal. The second Rx circuit 434 is a circuit for receiving a signal, and may not include components related to transmission of a signal.

The third antenna 443 and the fourth antenna 444 may be antennas disposed adjacent to each other. According to an example, the third antenna 443 and the fourth antenna 444 may be disposed at a lower side of the electronic device 101. In this case, the adjacency between the third antenna 443 and the fourth antenna 444 may indicate that a channel state estimated through the third antenna 443 and a channel state estimated through the fourth antenna 444 are substantially identical (or similar). Therefore, the processor 420 may use the channel state (channel estimation) estimated using the third antenna 443 to receive a signal through the fourth antenna 444. Alternatively, the processor 420 may use the estimated channel state obtained by using the fourth antenna 444 to transmit and/or receive a signal through the third antenna 443.

According to an example, the electronic device 101 may activate the Tx antenna switching while transmitting a signal and receiving a primary Rx signal through the first antenna 441, and receiving a diversity Rx signal through the third antenna 443. Tx antenna switching may refer to an operation of switching an antenna for outputting a transmission signal. According to an example, the electronic device 101 supporting Tx antenna switching may switch from a state of outputting a transmission signal through the first antenna 441 to a state of outputting a transmission signal through the third antenna 443, in accordance with activation of Tx antenna switching.

According to an example, the electronic device 101 that performs Tx antenna switching may output a transmission signal through at least one of the multiple antennas, and may transmit the transmission signal in various directions, thereby implementing an improvement in the transmission signal output performance. The processor 420 may perform Tx antenna switching if the electronic device 101 satisfies a specified condition. According to an example, the specified condition may include at least one of a condition in which the electronic device 101 is located in a weak electric field area, a condition in which a variation in the quality of a signal received by the electronic device 101 is greater than or equal to a designated value, and a condition in which the electronic device 101 detects that it is being gripped. The above-described condition is only an example, and the electronic device 101 may perform Tx antenna switching in case of satisfying various conditions.

According to an example, the processor 420 may, at a designated time (e.g., 640ms), determine whether the electronic device 101 satisfies a specified condition and, if the electronic device 101 satisfies the specified condition, perform the Tx antenna switching. The processor 420 may not perform Tx antenna switching and may not switch the antenna that outputs a transmission signal when the electronic device 101 satisfies a specified condition.

According to an example, the processor 420 may perform an operation of switching an antenna for outputting a transmission signal, as part of the operation of performing Tx antenna switching. For example, the processor 420 may control the first TRx circuit 431 and/or the second TRx circuit 433 to output a transmission signal through the third antenna 443 while a transmission signal is output through the first antenna 441. The switching of an antenna for outputting the transmission signal may require the first TRx circuit 431 and/or the second TRx circuit 433 to be configured for outputting a signal, and a delay time for the first TRx circuit 431 and/or the second TRx circuit 433 to be configured for outputting a signal may occur. The electronic device 101 may have difficulty in outputting a transmission signal and/or receiving a reception signal during a time required for the configuration of the first TRx circuit 431 and/or the second TRx circuit 433.

According to an example, a time period during which transmission of a transmission signal is difficult or impossible may be referred to as a Tx blanking time, and a time period during which reception of a reception signal is difficult or impossible may be referred to as an Rx blanking time. The electronic device 101 may be unable to output a transmission signal during a Tx blanking time caused by switching of an antenna for outputting the transmission signal, and may be unable to output a reception signal during an Rx blanking time caused by switching of an antenna for outputting the transmission signal.

According to an example, the processor 420 may perform an operation for reducing or eliminating an Rx blanking time.

According to an example, the processor 420 may, while performing Tx antenna switching, control the first Rx circuit 432 to cause the second antenna 442 adjacent to the first antenna 441 to receive a primary Rx signal. The processor 420 may, when the first Rx circuit 432 is in a deactivated state, activate the first Rx circuit 432 in response to initiation of Tx antenna switching, and control the first Rx circuit 432 to receive a primary Rx signal via the second antenna 442. Considering that the first TRx circuit 431 fails to receive the primary Rx signal due to Tx antenna switching, the processor 420 may control the first Rx circuit 432 to cause the second antenna 442 to receive the primary Rx signal instead, thereby reducing or eliminating a period of time (Rx blanking time) during which reception of a primary Rx signal cannot be performed. The processor 420 may allow the second antenna 442, which is adjacent to the first antenna 441, to receive the primary Rx signal, so that a channel state for reception of the primary Rx signal through the first antenna 441 can be used for reception of the primary Rx signal through the second antenna 442 without performing an operation of estimating a channel state for reception of the primary Rx signal through the second antenna 442.

According to an example, the processor 420 may, while performing Tx antenna switching, control the second Rx circuit 434 to cause the fourth antenna 444 adjacent to the third antenna 443 may receive a diversity Rx signal. When the second Rx circuit 434 is in a deactivated state, the processor 420 may activate the second Rx circuit 434 in response to initiation of Tx antenna switching, and control the second Rx circuit 434 to receive a primary Rx signal via the fourth antenna 444. Considering that the second TRx circuit 433 fails to receive the diversity Rx signal due to Tx antenna switching, the processor 420 may control the second Rx circuit 434 to cause the fourth antenna 444 to receive the diversity Rx signal instead, thereby reducing or eliminating a period of time (Rx blanking time) during which reception of the diversity Rx signal cannot be performed. The processor 420 may allow the fourth antenna 444, which is adjacent to the third antenna 443, to receive the diversity Rx signal, so that a channel state for reception of the diversity Rx signal through the third antenna 443 can be used for reception of the diversity Rx signal through the fourth antenna 444 without performing an operation of estimating a channel state for reception of the diversity Rx signal through the fourth antenna 444.

The electronic device 101 may receive a primary Rx signal through the second antenna 442 and a diversity Rx signal through the fourth antenna 444 while performing the Tx antenna switching, as described in the above example. Therefore, while performing the Tx antenna switching, the electronic device 101 may receive, from the cellular network 192 or 194 (or the base station), control data for signal transmission, and, after completing the Tx antenna switching, the electronic device 101 may transmit a signal to the cellular network 192 or 194 (or the base station), based on information (e.g., UL GRANT) included in the control data. Therefore, the electronic device 101 may prevent (or reduce) a situation in which no signal is transmitted for a predetermined period of time even after the Tx antenna switching is completed.

The example described above may be implemented in a case where, before the electronic device 101 starts Tx antenna switching, the electronic device 101 does not perform reception of a signal using the second antenna 442 and the fourth antenna 444. However, when the number of spatial streams (e.g., 4) of the signal received by the electronic device 101 from the cellular networks 192 and 194 is equal to or greater than a specified number (e.g., 2), the electronic device 101 may have to receive the signal transmitted by the cellular networks 192 and 194 by using all of the first antenna 441, the second antenna 442, the third antenna 443, and the fourth antenna 444. In the case in which the electronic device 101 performs Tx antenna switching while receiving a signal transmitted by a cellular network 192 or 194 by using all of the first antenna 441, the second antenna 442, the third antenna 443, and the fourth antenna 444, the electronic device may fail to receive a signal through some of the antennas (e.g., the first antenna 441 and the third antenna 443). The electronic device 101 may fail to appropriately receive control data transmitted by the cellular network 192 or 194 (or a base station).

In order to prevent the above-described phenomenon, the processor 420 may identify the number of spatial streams of the signal received from the cellular network 192 or 194 in response to identifying that the condition for activating the Tx antenna switching is satisfied.

According to an example, the processor 420 may identify the number of spatial streams, based on information (e.g., information included in an sr-PUCCH-ResourceIndex field) indicating the number of spatial streams included in a signal (e.g., an RRC connection reconfiguration message) received in the process of establishing a connection with the cellular network 192 or 194. In addition to the above-described examples, the processor 420 may identify the number of spatial streams in various ways.

The processor 420 may, when the identified number of spatial streams exceeds a specified number (for example, two, which may correspond to the number of antennas capable of receiving a signal while performing Tx antenna switching), transmit a signal for requesting the number of spatial streams to be configured to be less than or equal to (or, less than) a specified number to the cellular network 192 or 194 (or, the base station).

The signal requesting that the number of spatial streams be configured to be less than or equal to (or less than) a specified number may be included in a signal transmitted by the electronic device 101 to the cellular network 192 or 194 through a physical uplink control channel (PUCCH). According to an example, the processor 420 may transmit, to the cellular network 192 or 194, a UE capability information message including information indicating that the number of spatial streams is configured as a specified number (or a number less than or equal to the specified number). The transmission of the UE capability information message may cause the cellular network 192 or 194 to configure the number of spatial streams to be less than or equal to a specified number. The number of spatial streams may be referred to as a rank index or a rank indicator, and the cellular network 192 or 194 having received UE capability information may configure the number of spatial streams to be less than or equal to a specified number.

According to an example, the processor 420 may transmit a signal requesting a change in the number of spatial streams to the cellular network 192 or 194, and may then identify, for a specified time, whether the number of spatial streams has been changed. The specified time may be substantially the same as the cycle for determining whether Tx antenna switching is performed, but there is no limitation thereto.

According to an example, the processor 420 may identify the number of spatial streams included in the information (e.g., information related to a resource used for signal transmission) received from the cellular network 192 or 194 (or the base station) through a PUCCH, and identify whether the number of spatial streams has been changed to be less than or equal to a specified number (or less than the specified number).

The processor 420 may start Tx antenna switching by identifying that the changed number of spatial streams is less than or equal to (or less than) a specified number.

According to an example, while performing Tx antenna switching, the processor 420 may control the first Rx circuit 432 to cause the second antenna 442, which is adjacent to the first antenna 441, to receive a primary Rx signal. When the first Rx circuit 432 is in a deactivated state, the processor 420 may activate the first Rx circuit 432 in response to initiation of Tx antenna switching, and may control the first Rx circuit 432 to cause the second antenna 442 to receive a primary Rx signal. Considering that the first TRx circuit 431 fails to receive the primary Rx signal due to Tx antenna switching, the processor 420 may control the first Rx circuit 432 to cause the second antenna 442 to receive the primary Rx signal instead, thereby reducing or eliminating a period of time (Rx blanking time) during which reception of the primary Rx signal cannot be performed. The processor 420 may allow the second antenna 442, which is adjacent to the first antenna 441, to receive the primary Rx signal, so that a channel state for reception of the primary Rx signal through the first antenna 441 can be used for reception of the primary Rx signal through the second antenna 442 without performing an operation of estimating a channel state for reception of the primary Rx signal through the second antenna 442.

According to an example, while performing Tx antenna switching, the processor 420 may control the second Rx circuit 434 to cause the fourth antenna 444, which is adjacent to the third antenna 443, to receive a diversity Rx signal. When the second Rx circuit 434 is in a deactivated state, the processor 420 may activate the second Rx circuit 434 in response to initiation of Tx antenna switching, and control the second Rx circuit 434 to cause the fourth antenna 444 to receive the primary Rx signal. Considering that the second TRx circuit 433 fails to receive a diversity Rx signal due to Tx antenna switching, the processor 420 may control the second Rx circuit 434 to cause the fourth antenna 444 to receive the diversity Rx signal instead, thereby reducing or eliminating a period of time (Rx blanking time) during which the reception of diversity Rx signal cannot be performed. The processor 420 may allow the fourth antenna 444, which is adjacent to the third antenna 443, to receive the primary Rx signal, so that a channel state for reception of the primary Rx signal through the third antenna 443 can be used for reception of the primary Rx signal through the fourth antenna 444 without performing an operation of estimating a channel state for reception of the primary Rx signal through the fourth antenna 444.

According to an example, the processor 420 may, as Tx antenna switching is completed, perform diversity reception through the first antenna 441, and transmit a signal and receive a primary Rx signal through the third antenna 443. The processor 420 may determine that the Tx antenna switching has been completed by identifying that the amplifier of the second TRx circuit 443 is activated, and may control the first TRx circuit 441 and the second TRx circuit 443 to perform diversity reception through the first antenna 441 and to transmit a signal and receive a primary Rx signal through the third antenna 443.

According to an example, the processor 420 may perform a series of operations to increase the number of spatial streams again as the switching of the Tx antenna is completed.

The processor 420 may transmit, to the cellular network 192 or 194 (or the base station), a signal requesting to configure the number of spatial streams as a number equal to or greater than (or exceeding) a specified number, in order to increase the number of the identified spatial streams again.

A signal requesting to configure the number of spatial streams to be equal to or more (or to exceed) a specified number may be included in a signal that the electronic device 101 transmits to the cellular network 192 or 194 through a physical uplink control channel (PUCCH). According to an example, the processor 420 may transmit, to the cellular network 192 or 194, a UE capability information message including information for configuring the number of spatial streams to be equal to or greater than a specified number.

The processor 420 may not perform Tx antenna switching when it is identified that the number of spatial streams has not been changed to a number less than or equal to (or less than) a specified number. When the number of spatial streams is greater than the specified number, even if Tx antenna switching is performed, the possibility of receiving a control signal transmitted by the cellular network 192 or 194 without errors may be low. Accordingly, when it is identified that the number of spatial streams has not changed to be less than or equal to (or less than) the specified number, the processor 420 may not perform Tx antenna switching.

However, even if the number of spatial streams has not been changed to a number less than or equal to the specified number, the processor 420 may perform Tx antenna switching when the electronic device 101 satisfies a specific condition. For example, the processor 420 may perform Tx antenna switching by identifying that the specific absorption rate (SAR) of the electronic device 101 is greater than or equal to a specified size. As another example, the processor 420 may perform Tx antenna switching when it is determined that a quality (e.g., RSRP, RSSI) of the cellular communication measured by the electronic device 101 is less than or equal to (or less than) a designated value. The designated value may refer to a level of signal quality at which the cellular communication connection of the electronic device 101 may be released.

The processor 420 may, even when the number of spatial streams has not been changed to the specified number or less, control the first TRx circuit 431 to receive a primary Rx signal through the first antenna 441, and may control the second TRx circuit 433 to receive a diversity Rx signal through the third antenna 443, in case that the electronic device 101 satisfies a specific condition.

When it is determined that the number of spatial streams is less than or equal to a specified number (for example, two, which may correspond to the number of antennas capable of receiving a signal while performing Tx antenna switching), the processor 420 may perform Tx antenna switching without transmitting a signal requesting that the number of spatial streams to be configured as a specified number or less (or less than the specified number) to the cellular network 192 or 194 (or the base station).

According to an example, while performing Tx antenna switching, the processor 420 may control the first Rx circuit 432 to cause the second antenna 442, which is adjacent to the first antenna 441, to receive a primary Rx signal. When the first Rx circuit 432 is in a deactivated state, the processor 420 may activate the first Rx circuit 432 in response to initiation of Tx antenna switching, and may control the first Rx circuit 432 to cause the second antenna 442 to receive a primary Rx signal. Considering that the first TRx circuit 431 fails to receive the primary Rx signal due to Tx antenna switching, the processor 420 may control the first Rx circuit 432 to cause the second antenna 442 to receive the primary Rx signal instead, thereby reducing or eliminating a period of time (Rx blanking time) during which reception of the primary Rx signal cannot be performed. The processor 420 may allow the second antenna 442, which is adjacent to the first antenna 441, to receive the primary Rx signal, so that a channel state for reception of the primary Rx signal through the first antenna 441 can be used for reception of the primary Rx signal through the second antenna 442 without performing an operation of estimating a channel state for reception of the primary Rx signal through the second antenna 442.

According to an example, while performing Tx antenna switching, the processor 420 may control the second Rx circuit 434 to cause the fourth antenna 444, which is adjacent to the third antenna 443, to receive a diversity Rx signal. When the second Rx circuit 434 is in a deactivated state, the processor 420 may activate the second Rx circuit 434 in response to initiation of Tx antenna switching, and control the second Rx circuit 434 to cause the fourth antenna 444 to receive the primary Rx signal. Considering that the second TRx circuit 433 fails to receive a diversity Rx signal due to Tx antenna switching, the processor 420 may control the second Rx circuit 434 to cause the fourth antenna 444 to receive the diversity Rx signal instead, thereby reducing or eliminating a period of time (Rx blanking time) during which the reception of diversity Rx signal cannot be performed. The processor 420 may allow the fourth antenna 444, which is adjacent to the third antenna 443, to receive the primary Rx signal, so that a channel state for reception of the primary Rx signal through the third antenna 443 can be used for reception of the primary Rx signal through the fourth antenna 444 without performing an operation of estimating a channel state for reception of the primary Rx signal through the fourth antenna 444.

According to an example, the processor 420 may, as the Tx antenna switching is completed, perform diversity reception through the first antenna 441, and transmit a signal and receive a primary Rx signal through the third antenna 443. The processor 420 may determine that the Tx antenna switching has been completed, upon identifying that the amplifier of the second TRx circuit 443 is activated, and may control the first TRx circuit 441 and the second TRx circuit 443 to perform diversity reception through the first antenna 441, and to transmit a signal and receive a primary Rx signal through the third antenna 443.

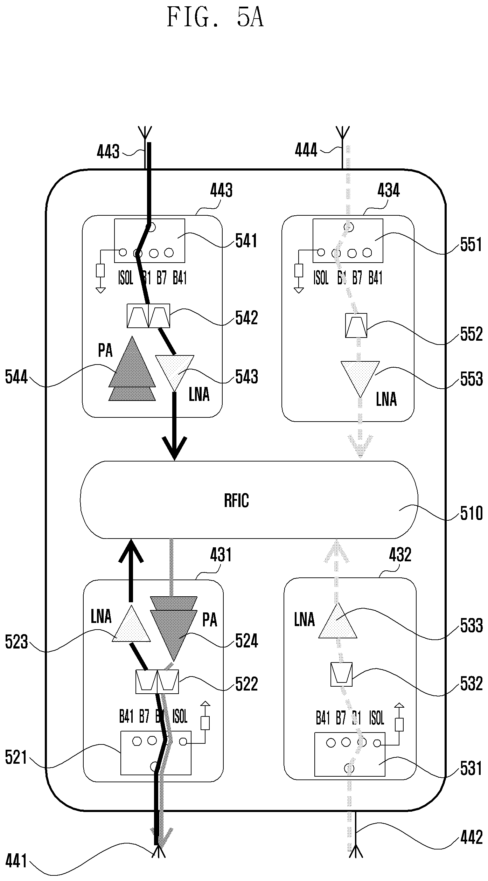

FIG. 5A illustrates an example in which an electronic device transmits a signal and receives a primary Rx signal through a first antenna, and receives a diversity Rx signal through a third antenna, according to an embodiment.

Referring to FIG. 5A, the electronic device 101 may transmit a signal and receives a primary Rx signal through the first antenna 441, and may receive a diversity Rx signal through the third antenna 443.

The signal to be transmitted through the first antenna 441 may be output through the first antenna 441 via an RFIC 510 and the first TRx circuit 431.

According to an example, the RFIC 510 may perform various operations of processing a signal received from the processor 420. The RFIC 510 may perform a modulation operation for a signal received from the processor 412. For example, an RFIC 520 may perform a frequency modulation operation of converting a baseband signal received from the processor 420 into a frequency band (e.g., an RF band) used for cellular communication. Alternatively, the RFIC 520 may perform a demodulation operation for a signal received from the outside. For example, the RFIC 520 may perform a frequency demodulation operation of converting a radio frequency (RF) signal to a baseband signal.

A signal transmitted through the first antenna 441 may be transmitted to the first antenna 441 through an amplifier 524, at least one filter 522, and a switch 521, which are included in the first TRx circuit 431, the filter 522 separating a reception signal and a transmission signal, and the switch 521 connecting, among the at least one filter 522, a filter corresponding to a frequency band of the signal to the first antenna 441. The at least one filter 522 may refer to a multiplexer, and the multiplexer 522 may be at least one of a duplexer, a triplexer, a quadplexer, or a hexaplexer.

The primary Rx signal received through the first antenna 441 may be transmitted to the RFIC 510 through the switch 521 and the low-noise amplifier 523 of the first TRx circuit 431.

The diversity Rx signal received through the third antenna 443 may be transmitted to the RFIC 510 through a switch 541, at least one filter 542 for separating a reception signal and a transmission signal, and a low-noise amplifier 543, which are included in the second TRx circuit 443. The at least one filter 542 may refer to a multiplexer, and the multiplexer may be at least one of a duplexer, a triplexer, a quadplexer, or a hexaplexer.

According to an example, the electronic device 101 may activate Tx antenna switching while transmitting a signal and receiving a primary Rx signal through the first antenna 441, and receiving a diversity Rx signal through the third antenna 443. Tx antenna switching may refer to an operation of switching an antenna that outputs a transmission signal. According to an example, the electronic device 101 supporting Tx antenna switching may switch from a state of outputting a transmission signal through the first antenna 441 to a state of outputting the transmission signal through a third antenna 443 in response to activation of Tx antenna switching.

According to an example, the electronic device 101 that performs Tx antenna switching may output a transmission signal through at least one antenna among the multiple antennas, and may transmit the transmission signal in various directions, thereby implementing improvement in the output performance of the transmission signal. The electronic device 101 may perform Tx antenna switching, if the electronic device 101 satisfies a specified condition. According to an example, the specified condition may include, for example, at least one of a condition in which the electronic device 101 is located in a weak electric field area, a condition in which a variation in the quality of a signal received by the electronic device 101 is greater than or equal to a designated value, and a condition in which the electronic device 101 detects that it is being gripped. The above-described condition is only an example, and the electronic device 101 may perform Tx antenna switching in case of satisfying various conditions.

According to an example, the electronic device 101 may identify, at a specified time (e.g., 640 ms), whether the electronic device 101 satisfies a specified condition and, if the electronic device 101 satisfies the specified condition, the electronic device 101 may perform Tx antenna switching. The electronic device 101 may not perform the Tx antenna switching and may not switch the antenna for outputting a transmission signal, in case that the electronic device 101 satisfies a specified condition.

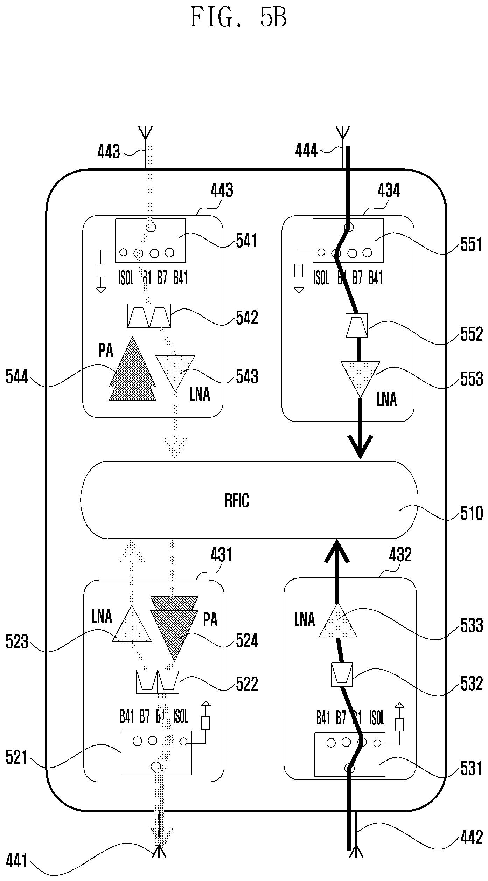

FIG. 5B illustrates an example in which an electronic device receives a primary Rx signal through a second antenna and receives a diversity Rx signal through a fourth antenna while performing Tx antenna switching, according to an embodiment.

According to an example, the electronic device 101 may perform an operation of switching an antenna for outputting a transmission signal as part of an operation of performing Tx antenna switching. For example, the electronic device 101 may control the first TRx circuit 431 and/or the second TRx circuit 433 to output a transmission signal through the third antenna 443, while in a state of outputting a transmission signal through the first antenna 441. The switching of an antenna for outputting the transmission signal may require the first TRx circuit 431 and/or the second TRx circuit 433 to be configured for outputting a signal, and a delay time for the first TRx circuit 431 and/or the second TRx circuit 433 to be configured for outputting a signal may occur. The electronic device 101 may have difficulty in outputting a transmission signal and/or receiving a reception signal during a time required for the configuration of the first TRx circuit 431 and/or the second TRx circuit 433.

According to an example, a time period during which transmission of a transmission signal is difficult or impossible may be referred to as a Tx blanking time, and a time period during which reception of a reception signal is difficult or impossible may be referred to as a Rx blanking time. The electronic device 101 may be unable to output a transmission signal during a Tx blanking time caused by switching of an antenna for outputting a transmission signal, and may be unable to output a reception signal during an Rx blanking time caused by switching of an antenna for outputting a transmission signal.

According to an example, the electronic device 101 may perform an operation for reducing or eliminating the Rx blanking time.

According to an example, while performing Tx antenna switching, the electronic device 101 may control the first Rx circuit 432 to cause the second antenna 442, which is adjacent to the first antenna 441, to receive a primary Rx signal. When the first Rx circuit 432 is in a deactivated state, the electronic device 101 may activate the first Rx circuit 432 in response to initiation of Tx antenna switching, and may control the first Rx circuit 432 to cause the second antenna 442 to receive a primary Rx signal. Considering that the first TRx circuit 431 fails to receive the primary Rx signal due to Tx antenna switching, the electronic device 101 may control the first Rx circuit 432 to cause the second antenna 442 to receive the primary Rx signal instead, thereby reducing or eliminating a period of time (Rx blanking time) during which reception of the primary Rx signal cannot be performed. The electronic device 101 may allow the second antenna 442, which is adjacent to the first antenna 441, to receive the primary Rx signal, so that a channel state for reception of the primary Rx signal through the first antenna 441 can be used for reception of the primary Rx signal through the second antenna 442 without performing an operation of estimating a channel state for reception of the primary Rx signal through the second antenna 442.

The primary Rx signal received through the second antenna 442 may be transmitted to the RFIC 510 through a switch 531, a filter 532 that passes a specific frequency band, and a low-noise amplifier 533 of the first Rx circuit 432.

According to an example, while performing Tx antenna switching, the electronic device 101 may control the second Rx circuit 434 to cause the fourth antenna 444, which is adjacent to the third antenna 443, to receive a diversity Rx signal. When the second Rx circuit 434 is in a deactivated state, the electronic device 101 may activate the second Rx circuit 434 in response to initiation of Tx antenna switching, and control the second Rx circuit 434 to cause the fourth antenna 444 to receive the primary Rx signal. Considering that the second TRx circuit 433 fails to receive a diversity Rx signal due to Tx antenna switching, the electronic device 101 may control the second Rx circuit 434 to cause the fourth antenna 444 to receive the diversity Rx signal instead, thereby reducing or eliminating a period of time (Rx blanking time) during which the reception of diversity Rx signal cannot be performed. The electronic device 101 may allow the fourth antenna 444, which is adjacent to the third antenna 443, to receive the diversity Rx signal, so that a channel state for reception of the diversity Rx signal through the third antenna 443 can be used for reception of the diversity Rx signal through the fourth antenna 444 without performing an operation of estimating a channel state for reception of the diversity Rx signal through the fourth antenna 444.

The diversity Rx signal received through the fourth antenna 444 may be transmitted to the RFIC 510 through a switch 551, a filter 552 that passes a specific frequency band, and a low-noise amplifier 553 of the second Rx circuit 434.

The electronic device 101 may, as described in the above example, receive a primary Rx signal through the second antenna 442 and receive a diversity Rx signal through the fourth antenna 444 while performing Tx antenna switching. Therefore, while performing Tx antenna switching, the electronic device 101 may receive control data for transmission of a signal from the cellular network 192 or 194 (or base station), and after the Tx antenna switching is completed, the electronic device 101 may transmit a signal to the cellular network 192 or 194 (or base station) based on the information (e.g., UL GRANT) included in the control data. Therefore, the electronic device 101 may prevent (or reduce) a situation in which a signal cannot be transmitted for a predetermined time after the Tx antenna switching is completed.

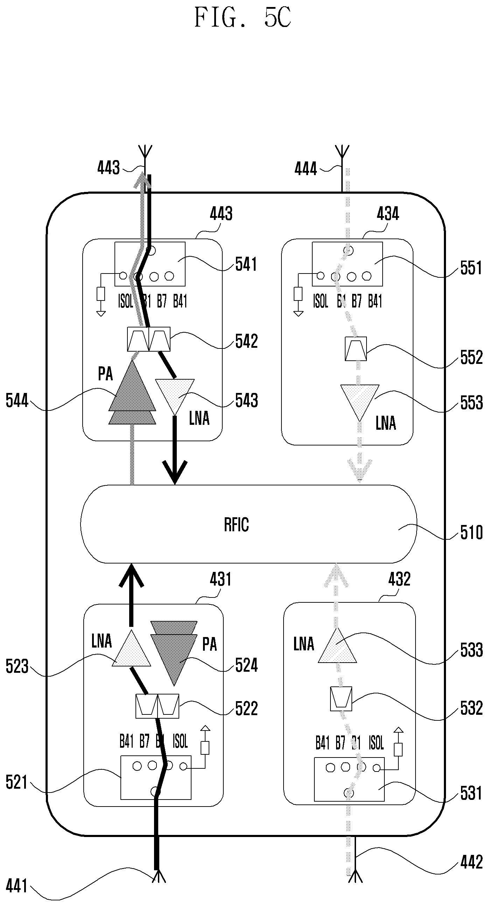

FIG. 5C illustrates an example in which an electronic device receives a diversity Rx signal through the first antenna and transmits a signal and receives a primary Rx signal through the third antenna as Tx antenna switching is completed, according to an embodiment.

According to an example, the electronic device 101 may perform diversity reception through the first antenna 441, and perform transmission of a signal and reception of a primary Rx signal through the third antenna 443 as the Tx antenna switching is completed. The electronic device 101 may, upon identifying that the amplifier of the second TRx circuit 443 is activated, determine that the Tx antenna switching has been completed, and may control the first TRx circuit 441 and the second TRx circuit 443 to perform diversity reception through the first antenna 441, and to transmit a signal and receive a primary Rx signal through the third antenna 443.

A signal to be transmitted through the third antenna 443 may be transmitted to the third antenna 443 through an amplifier 544, at least one filter 542, and a switch 541 included in the second TRx circuit 433, the at least one filter 542 separating a reception signal and a transmission signal, and the switch 541 connecting, among the at least one filter 542, a filter corresponding to a frequency band of the signal to the third antenna 443.

The diversity Rx signal received through the first antenna 441 may be transmitted to the RFIC 510 through the switch 521 and the low-noise amplifier 523 of the first TRx circuit 431.

The primary Rx signal received through the third antenna 443 may be transmitted to the RFIC 510 through the switch 541, at least one filter 542 which separates a reception signal and a transmission signal, and the low-noise amplifier 543, which are included in the second TRx circuit 443.

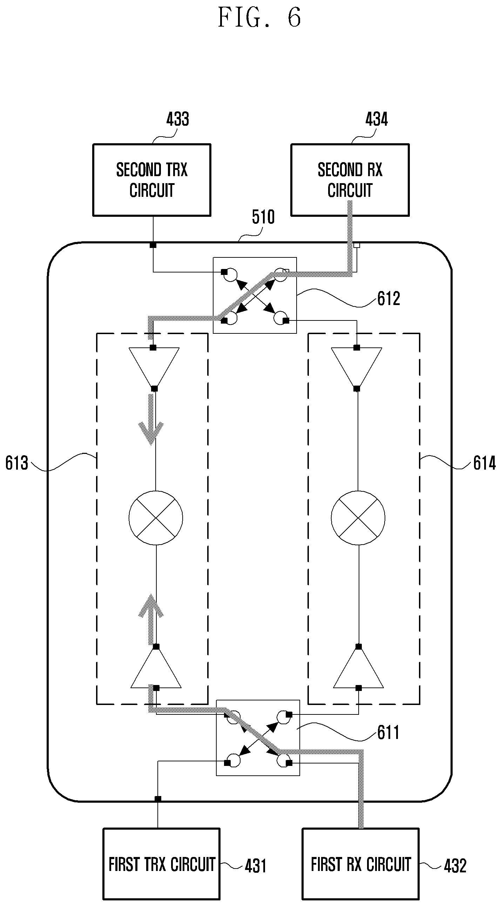

FIG. 6 illustrates an example in which, while performing Tx antenna switching, an electronic device controls an RFIC to receive a primary Rx signal through a second antenna and to receive a diversity Rx signal through a fourth antenna, according to an embodiment.

Referring to FIG. 6, the RFIC 510 may include a first transceiver chain 613 including at least one component (e.g., an amplifier, a low-noise amplifier, a phase-locked loop (PLL)) for processing a signal of a first frequency band, a second transceiver chain 614 including at least one component (e.g., an amplifier, a low-noise amplifier, a PLL) for processing a signal of a second frequency band, a first switch 611 for electrically connecting the first transceiver chain 613 and the second transceiver chain 614 to the first TRx circuit 431 and the first Rx circuit 432, and a second switch 612 for electrically connecting the first transceiver chain 613 and the second transceiver chain 614 to the second TRx circuit 433 and the second Rx circuit 434.

According to an example, the electronic device 101 may transmit a signal and receive a primary Rx signal through the first antenna 441, and may receive a diversity Rx signal through the third antenna 443. In case that the frequency band of the signal transmitted and/or received through the first antenna 441 and the signal received through the third antenna 443 is in the first frequency band, the electronic device 101 may control the first switch 611 to electrically connect the first transceiver chain 613 to the first TRx circuit 431, and may control the second switch 612 to electrically connect the first transceiver chain 613 to the second TRx circuit 433.

According to an example, the electronic device 101 may activate Tx antenna switching during transmission of a signal and reception of a primary Rx signal through the first antenna 441 and reception of a diversity Rx signal through the third antenna 443.

According to an example, while performing Tx antenna switching, the electronic device 101 may control the first Rx circuit 432 to cause the second antenna 442, which is adjacent to the first antenna 441, to receive a primary Rx signal. When the first Rx circuit 432 is in a deactivated state, the electronic device 101 may activate the first Rx circuit 432 in response to initiation of Tx antenna switching, and may control the first Rx circuit 432 to cause the second antenna 442 to receive a primary Rx signal. Considering that the first TRx circuit 431 fails to receive the primary Rx signal due to Tx antenna switching, the electronic device 101 may control the first Rx circuit 432 to cause the second antenna 442 to receive the primary Rx signal instead, thereby reducing or eliminating a period of time (Rx blanking time) during which reception of the primary Rx signal cannot be performed. The electronic device 101 may allow the second antenna 442, which is adjacent to the first antenna 441, to receive the primary Rx signal, so that a channel state for reception of the primary Rx signal through the first antenna 441 can be used for reception of the primary Rx signal through the second antenna 442 without performing an operation of estimating a channel state for reception of the primary Rx signal through the second antenna 442.

According to an example, while performing Tx antenna switching, the electronic device 101 may control the second Rx circuit 434 to cause the fourth antenna 444, which is adjacent to the third antenna 443, to receive a diversity Rx signal. When the second Rx circuit 434 is in a deactivated state, the electronic device 101 may activate the second Rx circuit 434 in response to initiation of Tx antenna switching, and control the second Rx circuit 434 to cause the fourth antenna 444 to receive the primary Rx signal. Considering that the second TRx circuit 433 fails to receive a diversity Rx signal due to Tx antenna switching, the electronic device 101 may control the second Rx circuit 434 to cause the fourth antenna 444 to receive the diversity Rx signal instead, thereby reducing or eliminating a period of time (Rx blanking time) during which the reception of diversity Rx signal cannot be performed. The electronic device 101 may allow the fourth antenna 444, which is adjacent to the third antenna 443, to receive the primary Rx signal, so that a channel state for reception of the primary Rx signal through the third antenna 443 can be used for reception of the primary Rx signal through the fourth antenna 444 without performing an operation of estimating a channel state for reception of the primary Rx signal through the fourth antenna 444.

In order to receive the primary Rx signal through the second antenna 442 and receive the diversity Rx signal through the fourth antenna 444, the electronic device 101 may control the first switch 611 to electrically connect the first Rx circuit 432 to the first transceiver chain 613, and may control the second switch 612 to electrically connect the second Rx circuit 434 to the first transceiver chain 613.

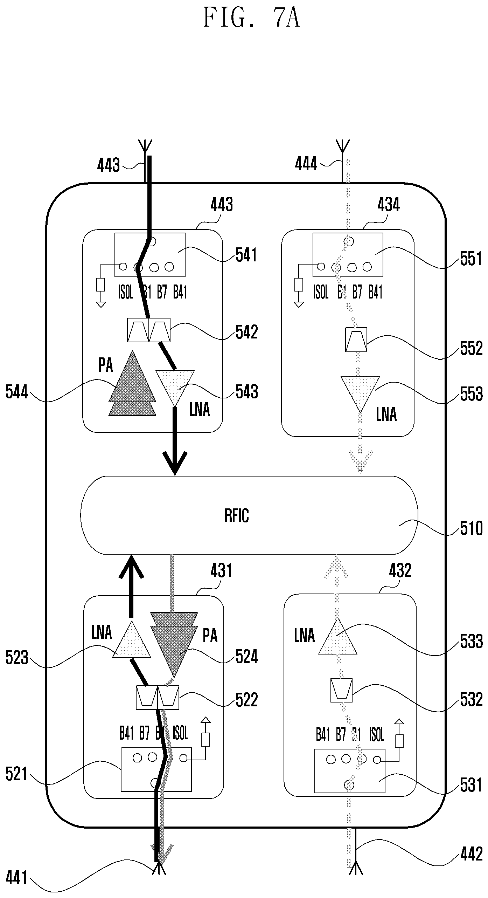

FIG. 7A illustrates an example in which the electronic device transmits a signal and receives a primary Rx signal through a first antenna, and receives a diversity Rx signal through a third antenna.

Referring to FIG. 7A, the electronic device 101 may transmit a signal and receive a primary Rx signal through the first antenna 441, and may receive a diversity Rx signal through the third antenna 443.

The signal to be transmitted through the first antenna 441 may be output through the first antenna 441 via the RFIC 510 and the first TRx circuit 431.

According to an example, the RFIC 510 may perform various operations of processing a signal received from the processor 420. The RFIC 510 may perform a modulation operation on a signal received from the processor 412. For example, the RFIC 520 may perform a frequency modulation operation of converting a baseband signal received from the processor 420 to a frequency band (e.g., an RF band) used for cellular communication. Alternatively, the RFIC 520 may perform a demodulation operation with respect to a signal received from the outside. For example, the RFIC 520 may perform a frequency demodulation operation of converting a radio frequency (RF) signal to a baseband signal.

A signal to be transmitted through the first antenna 441 may be transmitted to the first antenna 441 through an amplifier 524, at least one filter 522, and a switch 521, which are included in the first TRx circuit 431, the filter 522 separating a reception signal and a transmission signal, and the switch 521 connecting, among the at least one filter 522, a filter corresponding to a frequency band of the signal to the first antenna 441.

The primary Rx signal received through the first antenna 441 may be transmitted to the RFIC 510 through the switch 521 and the low-noise amplifier 523 of the first TRx circuit 431.

The diversity Rx signal received through the third antenna 443 may be transmitted to the RFIC 510 through the switch 541, at least one filter 542 which separates a reception signal and a transmission signal, and a low-noise amplifier 543, which are included in the second TRx circuit 443.

According to an example, the electronic device 101 may activate the Tx antenna switching while transmitting a signal and receiving a primary Rx signal through the first antenna 441, and receiving a diversity Rx signal through the third antenna 443. Tx antenna switching may refer to an operation of switching an antenna for outputting a transmission signal. According to an example, the electronic device 101 supporting Tx antenna switching may switch from a state of outputting a transmission signal through the first antenna 441 to a state of outputting a transmission signal through the third antenna 443, in accordance with activation of Tx antenna switching.

According to an example, the electronic device 101 that performs the Tx antenna switching may output a transmission signal through at least one antenna among multiple antennas, and transmit the transmission signal in various directions, thereby implementing an improvement in the transmission signal output performance. The electronic device 101 may perform Tx antenna switching, in case that the electronic device 101 satisfies a specified condition. According to an example, the specified condition may include at least one of a condition in which the electronic device 101 is located in a weak electric field area, a condition in which a variation in the quality of a signal received by the electronic device 101 is greater than or equal to a designated value, and a condition in which the electronic device 101 detects that it is being gripped. The above-described condition is only an example, and the electronic device 101 may perform Tx antenna switching in case of satisfying various conditions.

According to an example, the electronic device 101 may identify whether the electronic device 101 satisfies a specified condition at a specified time (e.g., 640 ms) and, if the electronic device 101 satisfies the specified condition, the electronic device 101 may perform Tx antenna switching. The electronic device 101 may not perform Tx antenna switching, and may not perform switching of an antenna for outputting a transmission signal, in the case that the electronic device 101 satisfies a specified condition.

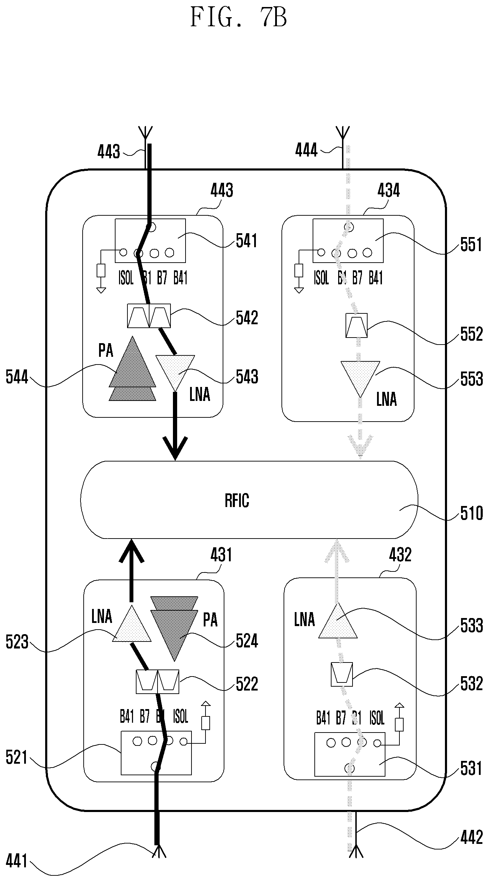

FIG. 7B illustrates an example in which the electronic device receives a primary Rx signal through a first antenna and receives a diversity Rx signal through a third antenna while performing Tx antenna switching.

According to an example, the electronic device 101 may perform an operation of switching an antenna for outputting a transmission signal, as a part of the operation of performing Tx antenna switching. For example, in a state in which the electronic device 101 outputs a transmission signal through the first antenna 441, the electronic device 101 may control the first TRx circuit 431 and/or the second TRx circuit 433 to output a transmission signal through the third antenna 443. The switching of an antenna for outputting a transmission signal may require the first TRx circuit 431 and/or the second TRx circuit 433 to be configured for outputting a signal, and a delay time for the first TRx circuit 431 and/or the second TRx circuit 433 to be configured for outputting a signal may occur. The electronic device 101 may have difficulty in outputting a transmission signal during a time required for the configuration of the first TRx circuit 431 and/or the second TRx circuit 433.

According to an example, while performing Tx antenna switching, the electronic device 101 may control the first TRx circuit 431 to receive a primary Rx signal through the first antenna 441. The electronic device 101 may, while performing Tx antenna switching, deactivate an element (e.g., the amplifier 524) related to the output of a transmission signal among the first TRx circuits 431, and may maintain an element (e.g., the low-noise amplifier 523) related to the reception of a reception signal in an active state.

According to an example, while performing Tx antenna switching, the electronic device 101 may control the second TRx circuit 433 to receive a diversity Rx signal through the third antenna 443. The electronic device 101 may deactivate an element (e.g., the amplifier 544) related to output of a transmission signal in the second TRx circuit 433 during Tx antenna switching, and may maintain an element (e.g., the low-noise amplifier 543) related to reception of a reception signal in an active state.

The above-described example may be applied in a situation in which, after the electronic device 101 has transmitted, to the cellular network 192 or 194, a request to reduce the number of spatial streams to be less than a specified number, the number of spatial streams has not changed but the electronic device 101 satisfies a specified condition and performs Tx antenna switching. The electronic device 101 may, in a state in which the number of spatial streams is not reduced, receive a primary Rx signal through the first antenna 441, and receive a diversity Rx signal through the second antenna 442, the third antenna 443, and the fourth antenna 444.

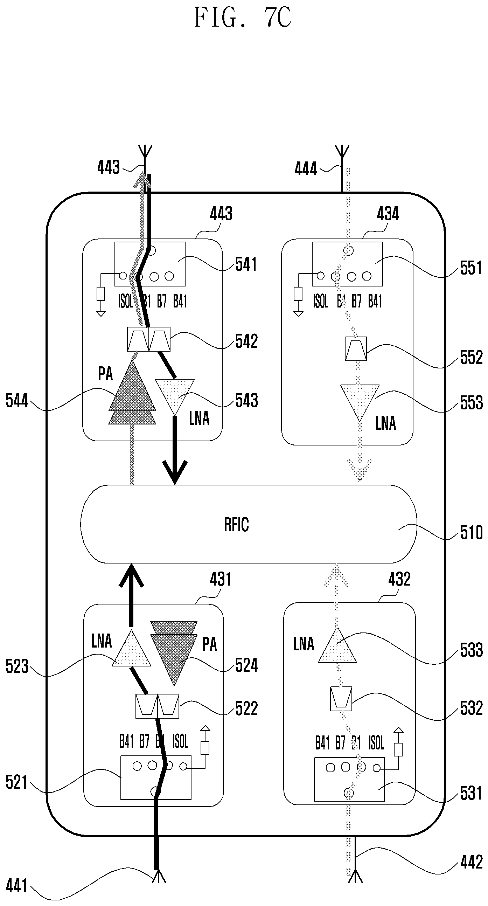

FIG. 7C illustrates an example in which, as during Tx antenna switching is completed, a diversity Rx signal is received through a first antenna and a signal is transmitted and a primary Rx signal is received through a third antenna.

According to an example, the electronic device 101 may perform diversity reception through the first antenna 441, and transmit a signal and receive a primary Rx signal through the third antenna 443, as the Tx antenna switching is completed. The electronic device 101 may, upon identifying that the amplifier of the second TRx circuit 443 has been activated, determine that the Tx antenna switching has been completed, and control the first TRx circuit 441 and the second TRx circuit 443 to perform diversity reception through the first antenna 441, and to transmit a signal and receive a primary Rx signal through the third antenna 443.

The signal to be transmitted through the third antenna 443 may be transmitted to the third antenna 443 through an amplifier 544, at least one filter 542, and a switch 541, which are included in the second TRx circuit 433, the filter 542 separating a reception signal and a transmission signal, and the a switch 541 connecting, among the at least one filter 542, a filter corresponding to a frequency band of a signal to the third antenna 443.

The diversity Rx signal received through the first antenna 441 may be transmitted to the RFIC 510 through the switch 521 and the low-noise amplifier 523 of the first TRx circuit 431.

The primary Rx signal received through the third antenna 443 may be transmitted to the RFIC 510 through the switch 541, the at least one filter 542 for separating a reception signal and a transmission signal, and the low-noise amplifier 543, which are included in the second TRx circuit 443.

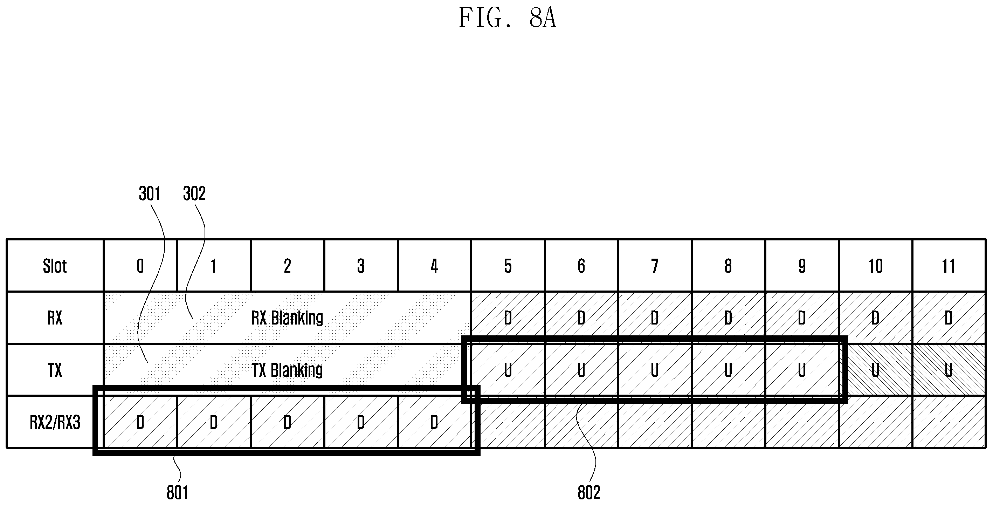

FIG. 8A illustrates an example in which an electronic device transmits the signal to a cellular network, based on a signal received while performing Tx antenna switching, according to an embodiment.

As described above with reference to FIG. 2, as the antenna for outputting a transmission signal is switched, a first TRx circuit (e.g., the first TRx circuit 231 of FIG. 2) and/or a second TRx circuit (e.g., the second TRx circuit 232 of FIG. 2) may require a predetermined configuration time.

The electronic device 101 may have difficulty in outputting a transmission signal and/or receiving a reception signal during a time required for the configuration of the first TRx circuit 231 and/or the second TRx circuit 232.

According to an example, a time period during which transmission of a transmission signal is difficult or impossible may be referred to as a Tx blanking time, and a time period during which reception of a reception signal is difficult or impossible may be referred to as an Rx blanking time. The electronic device 101 may be unable to output a transmission signal during a Tx blanking time caused by switching of an antenna for outputting a transmission signal, and may be unable to output a reception signal during an Rx blanking time caused by switching of an antenna for outputting a transmission signal.

Referring to FIG. 8A, the electronic device 101 may not transmit a signal during a time corresponding to a designated number of slots (e.g., slot 0, slot 1, slot 2, slot 3, and slot 4) according to activation of the Tx antenna switching. The time corresponding to a designated number of slots may be referred to as a Tx blanking time 301.

The electronic device 101, according to activation of the Tx antenna switching, may not receive a signal during a time corresponding to a designated number of slots (e.g., slot 0, slot 1, slot 2, slot 3, slot 4). A time corresponding to a designated number of slots may be referred to as an Rx blanking time 302.

As described above with reference to FIG. 4, when the electronic device 101 starts Tx antenna switching while transmitting a signal and receiving a primary Rx signal through the first antenna 441 and receiving a diversity Rx signal through the third antenna 443, the electronic device 101 may control the first Rx circuit 442 to receive the primary Rx signal through the second antenna 442, and may control the second Rx circuit 444 to receive the diversity Rx signal through the fourth antenna 444.

The electronic device 101 may receive a signal through the first Rx circuit 442 and the second Rx circuit 444 even when the first TRx circuit 431 and the second TRx circuit 433 fail to receive a signal during the Rx blanking time 302 (indicated by reference numeral 801). The electronic device 101 may receive control data from the cellular network 192 or 194, and the electronic device 101 may receive, during the Rx blanking time 302, information (e.g., UL GRANT) related to allocation of resources required for signal transmission, through the first Rx circuit 442 and the second Rx circuit 444. Therefore, the electronic device 101 may prevent a Tx blanking time (e.g., the Tx blanking time 303 in FIG. 3) that may occur after completion of Tx antenna switching, and may transmit a signal to a cellular network 192 or 194 during a time 802 after the Tx blanking time 301.

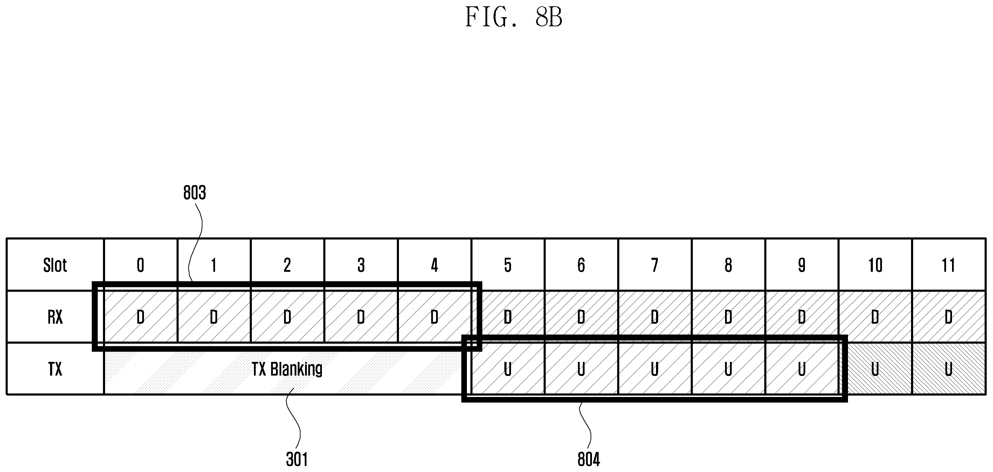

FIG. 8B illustrates an example in which an electronic device transmits a signal to a cellular network, based on a signal received while performing Tx antenna switching, according to an embodiment.

As described with reference to FIG. 2, when the antenna for outputting a transmission signal is switched, the first TRx circuit (e.g., the first TRx circuit 231 in FIG. 2) and/or the second TRx circuit (e.g., the second TRx circuit 232 in FIG. 2) may require a predetermined configuration time.

The electronic device 101 may have difficulty in outputting a transmission signal and/or receiving a reception signal during the time required for configuration of the first TRx circuit 231 and/or the second TRx circuit 232.

According to an example, a time period during which transmission of a transmission signal is difficult or impossible may be referred to as a Tx blanking time, and a time period during which reception of a reception signal is difficult or impossible may be referred to as a Rx blanking time. The electronic device 101 may be unable to output a transmission signal during a Tx blanking time generated by switching of an antenna for outputting a transmission signal, and may be unable to output a reception signal during an Rx blanking time generated by switching of an antenna for outputting a transmission signal.

Referring to FIG. 3, the electronic device 101, according to activation of the Tx antenna switching, may not transmit a signal during a time corresponding to a designated number of slots (e.g., slot 0, slot 1, slot 2, slot 3, slot 4). A time corresponding to a designated number of slots may be referred to as a Tx blanking time 301.

As described above with reference to FIG. 4 and FIGS. 7A to 7C, when the electronic device 101 starts Tx antenna switching while outputting a signal and receiving a primary Rx signal through the first antenna 441 and receiving a diversity Rx signal through the third antenna 443, the electronic device 101 may control the first TRx circuit 441 to receive the primary Rx signal through the first antenna 441, and may control the second TRx circuit 443 to receive the diversity Rx signal through the third antenna 443.

The electronic device 101 may receive a signal through the first antenna 441 and the second antenna 442 during performance of Tx antenna switching (indicated by reference numeral 803). The electronic device 101 may receive control data from the cellular network 192 or 194, and the electronic device 101 may receive information (e.g., UL GRANT) related to allocation of resources required for signal transmission , through the first TRx circuit 441 and the second TRx circuit 443 during the Tx blanking time 301. Therefore, the electronic device 101 may prevent a Tx blanking time (e.g., the Tx blanking time 303 in FIG. 3) that may occur after completion of the Tx antenna switching, and may transmit a signal to the cellular network 192 or 194 during a time 804 after the Tx blanking time 301.

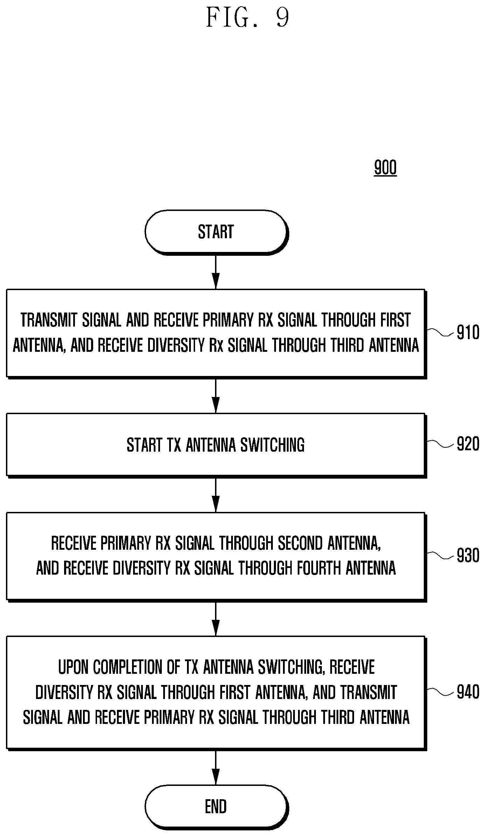

FIG. 9 is an operation flowchart 900 illustrating an operation method of an electronic device according to an embodiment.

The electronic device (e.g., the electronic device 101 of FIG. 4) may, in operation 910, transmit a signal and receive a primary Rx signal through a first antenna (e.g., the first antenna 441 of FIG. 4), and receive a diversity Rx signal through a third antenna (e.g., the third antenna 443 of FIG. 4).

The electronic device 101 may start the Tx antenna switching in operation 920.

According to an example, the electronic device 101 may activate the Tx antenna switching while transmitting a signal and receiving a primary Rx signal through the first antenna 441, and receiving a diversity Rx signal through the third antenna 443. Tx antenna switching may refer to an operation of switching an antenna for outputting a transmission signal. According to an example, the electronic device 101 supporting Tx antenna switching may, according to activation of the Tx antenna switching, switch from a state in which a transmission signal is output through the first antenna 441 to a state in which a transmission signal is output through the second antenna 442.

According to an example, the electronic device 101 that performs Tx antenna switching may output a transmission signal through at least one antenna among multiple antennas, and transmit the transmission signal in various directions, thereby implementing an improvement in the output performance of the transmission signal. The electronic device 101 may perform Tx antenna switching when the electronic device 101 satisfies a specified condition. According to an example, the specified condition may include at least one of a condition in which the electronic device 101 is located in a weak electric field area, a condition in which a variation in the quality of a signal received by the electronic device 101 is greater than or equal to a designated value, and a condition in which the electronic device 101 detects that it is being gripped. The above-described condition is only an example, and the electronic device 101 may perform Tx antenna switching in case of satisfying various conditions.

According to an example, the electronic device 101 may identify whether the electronic device 101 satisfies a predetermined condition at a specified time (e.g., 640 ms), and if the electronic device 101 satisfies the predetermined condition, the electronic device 101 may perform Tx antenna switching. When the electronic device 101 satisfies a predetermined condition, the electronic device 101 may not perform Tx antenna switching, and may not switch the antenna for outputting a transmission signal.

The electronic device 101 may receive a primary Rx signal through a second antenna (e.g., the second antenna 442 of FIG. 4) and receive a diversity Rx signal through a fourth antenna (e.g., the fourth antenna 444 of FIG. 4) in operation 930.

According to an example, the electronic device 101 may perform an operation of switching an antenna for outputting a transmission signal, as part of an operation for performing Tx antenna switching. For example, the electronic device 101 may control the first TRx circuit 431 and/or the second TRx circuit 433 to output a transmission signal through the third antenna 443 in a state in which a transmission signal is output through the first antenna 441. Switching of the antenna for outputting the transmission signal may require the first TRx circuit 431 and/or the second TRx circuit 433 to be configured to output a signal, and a delay time for the first TRx circuit 431 and/or the second TRx circuit 433 to be configured to output a signal may occur. The electronic device 101 may have difficulty in outputting a transmission signal and/or receiving a reception signal during a time required for the configuration of the first TRx circuit 431 and/or the second TRx circuit 433.

According to an example, a time period during which transmission of a transmission signal is difficult or impossible may be referred to as a Tx blanking time, and a time period during which reception of a reception signal is difficult or impossible may be referred to as a Rx blanking time. The electronic device 101 may not be able to output a transmission signal during a Tx blanking time caused by switching of an antenna for outputting the transmission signal, and may not be able to output a reception signal during an Rx blanking time caused by switching of an antenna for outputting the transmission signal.

According to an example, the electronic device 101 may perform an operation for reducing or eliminating the Rx blanking time.

According to an example, while performing Tx antenna switching, the electronic device 101 may control the first Rx circuit 432 to cause the second antenna 442, which is adjacent to the first antenna 441, to receive a primary Rx signal. When the first Rx circuit 432 is in a deactivated state, the electronic device 101 may activate the first Rx circuit 432 in response to initiation of Tx antenna switching, and may control the first Rx circuit 432 to cause the second antenna 442 to receive a primary Rx signal. Considering that the first TRx circuit 431 fails to receive the primary Rx signal due to Tx antenna switching, the electronic device 101 may control the first Rx circuit 432 to cause the second antenna 442 to receive the primary Rx signal instead, thereby reducing or eliminating a period of time (Rx blanking time) during which reception of the primary Rx signal cannot be performed. The electronic device 101 may allow the second antenna 442, which is adjacent to the first antenna 441, to receive the primary Rx signal, so that a channel state for reception of the primary Rx signal through the first antenna 441 can be used for reception of the primary Rx signal through the second antenna 442 without performing an operation of estimating a channel state for reception of the primary Rx signal through the second antenna 442.

According to an example, while performing Tx antenna switching, the electronic device 101 may control the second Rx circuit 434 to cause the fourth antenna 444, which is adjacent to the third antenna 443, to receive a diversity Rx signal. When the second Rx circuit 434 is in a deactivated state, the electronic device 101 may activate the second Rx circuit 434 in response to initiation of Tx antenna switching, and control the second Rx circuit 434 to cause the fourth antenna 444 to receive the primary Rx signal. Considering that the second TRx circuit 433 fails to receive a diversity Rx signal due to Tx antenna switching, the electronic device 101 may control the second Rx circuit 434 to cause the fourth antenna 444 to receive the diversity Rx signal instead, thereby reducing or eliminating a period of time (Rx blanking time) during which the reception of diversity Rx signal cannot be performed. The electronic device 101 may allow the fourth antenna 444, which is adjacent to the third antenna 443, to receive the primary Rx signal, so that a channel state for reception of the primary Rx signal through the third antenna 443 can be used for reception of the primary Rx signal through the fourth antenna 444 without performing an operation of estimating a channel state for reception of the primary Rx signal through the fourth antenna 444.

The electronic device 101 may receive a primary Rx signal via the second antenna 442, and receive a diversity Rx signal via the fourth antenna 444, while performing Tx antenna switching, as described in the above example. Therefore, while performing Tx antenna switching, the electronic device 101 may receive control data for transmitting a signal from the cellular network 192 or 194 (or the base station), and, after the Tx antenna switching is completed, the electronic device 101 may transmit the signal to the cellular network 192 or 194 (or the base station), based on information (e.g., UL GRANT) included in the control data. Therefore, the electronic device 101 may prevent (or reduce) a situation in which a signal cannot be transmitted for a predetermined period of time even after the Tx antenna switching is completed.

The electronic device 101 may, in operation 940, receive a diversity Rx signal through the first antenna 441 and transmit a signal and receive a primary Rx signal through the third antenna 443, if the Tx antenna switching is completed.

According to an example, the electronic device 101 may perform diversity reception through the first antenna 441, and may transmit a signal and receive a primary Rx signal through the third antenna 443, in response to completion of Tx antenna switching. The electronic device 101 may, upon identifying that the amplifier of the second TRx circuit 443 has been activated, determine that the Tx antenna switching has been completed, and control the first TRx circuit 441 and the second TRx circuit 443 to perform diversity reception through the first antenna 441 and to transmit a signal and receive a primary Rx signal through the third antenna 443.

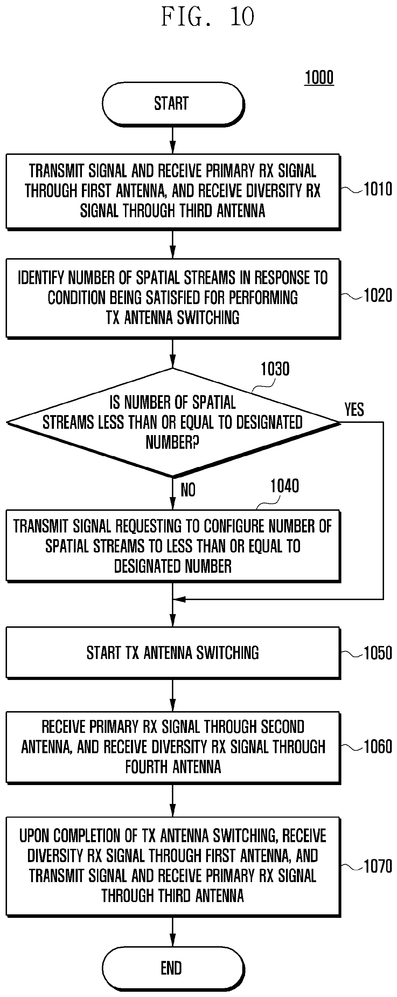

FIG. 10 is an operation flowchart 1000 illustrating a method of operating an electronic device according to an embodiment.

The electronic device (e.g., the electronic device 101 of FIG. 4) may, in operation 1010, transmit a signal and receive a primary Rx signal through a first antenna (e.g., the first antenna 441 of FIG. 4), and may receive a diversity Rx signal through a third antenna (e.g., the third antenna 443 of FIG. 4).

In operation 1020, the electronic device 101 may identify the number of spatial streams in response to a condition for performing Tx antenna switching being satisfied.

According to an example, the electronic device 101 may identify the number of spatial streams, based on information (e.g., information included in an sr-PUCCH-Resourceindex field) indicating the number of spatial streams, which is included in a signal (e.g., RRC connection reconfiguration message) received during the process of establishing a connection with a cellular network 192 or 194. In addition to the above-described example, the electronic device 101 may identify the number of spatial streams in various ways.

The electronic device 101 may identify, in operation 1030, whether the number of spatial streams is less than or equal to a specified number (or less than the specified number).

In operation 1040, when the number of spatial streams is greater than a specified number (or equal to or greater than the specified number) ("No" in operation 1030), the electronic device 101 may transmit a signal requesting to configure the number of spatial streams to be equal to or less than the specified number to the cellular network 192 or 194.

The electronic device 101 may, when the number of identified spatial streams exceeds a specified number (e.g., 2, which is the number of antennas capable of receiving a signal while performing Tx antenna switching), transmit a signal requesting to configure the number of spatial streams to be less than or equal to (or less than) the specified number to the cellular network 192 or 194 (or base station).

A signal requesting to configure the number of spatial streams to be less than or equal to (or less than) a specified number may be included in a signal transmitted by the electronic device 101 to the cellular network 192 or 194 via a physical uplink control channel (PUCCH). According to an example, the electronic device 101 may transmit a UE capability information message including information indicating that the number of spatial streams is configured to be a specified number (or less than or equal to the specified number) to the cellular network 192 or 194. Transmission of the UE capability information message may induce the cellular network 192 or 194 to configure the number of spatial streams to be equal to or less than a specified number. The number of spatial streams may be referred to as a rank index, and the cellular network 192 or 194 having received the UE capability information may configure the number of spatial streams to be less than or equal to a specified number.

According to an example, after the electronic device 101 has transmitted a signal requesting a change in the number of spatial streams to the cellular network 192 or 194, the electronic device 101 may then identify, for a specified time, whether the number of spatial streams has been changed. The specified time may be substantially the same as the cycle for determining whether Tx antenna switching is performed, but there is no limitation thereto.

According to an example, the electronic device 101 may identify a number of spatial streams included in the information (e.g., information related to a resource used for signal transmission) received through a PUCCH from the cellular network 192 or 194 (or the base station), and may identify whether the number of spatial streams has been changed to a number less than or equal to the specified number (or less than the specified number). In response to the identification ("YES" in operation 1030) that the changed number of spatial streams is less than or equal to a specified number (or, is less than a specified number), the electronic device 101 may start Tx antenna switching in operation 1050.

According to an example, the electronic device 101 may perform Tx antenna switching when a condition for performing Tx antenna switching corresponds to a specified condition, even when the number of spatial streams has not changed or the changed number of spatial streams exceeds a specified number

("NO" in operation 1030). The specified condition may include a condition in which a quality of a signal received by the electronic device 101 is less than or equal to (or less than) a designated level, a condition in which the electronic device 101 may have a high possibility of occurrence of a radio link failure (RLF), and/or a condition in which the electronic device 101 is performing a specific absorption rate (SAR) operation.

The electronic device 101 may, in operation 1060, receive a primary Rx signal through a second antenna (e.g., the second antenna 442 of FIG. 4) and receive a diversity Rx signal through a fourth antenna (e.g., the fourth antenna 444 of FIG. 4).

According to an example, while performing Tx antenna switching, the electronic device 101 may control the first Rx circuit 432 to cause the second antenna 442, which is adjacent to the first antenna 441, to receive a primary Rx signal. When the first Rx circuit 432 is in a deactivated state, the electronic device 101 may activate the first Rx circuit 432 in response to initiation of Tx antenna switching, and may control the first Rx circuit 432 to cause the second antenna 442 to receive a primary Rx signal. Considering that the first TRx circuit 431 fails to receive the primary Rx signal due to Tx antenna switching, the electronic device 101 may control the first Rx circuit 432 to cause the second antenna 442 to receive the primary Rx signal instead, thereby reducing or eliminating a period of time (Rx blanking time) during which reception of the primary Rx signal cannot be performed. The electronic device 101 may allow the second antenna 442, which is adjacent to the first antenna 441, to receive the primary Rx signal, so that a channel state for reception of the primary Rx signal through the first antenna 441 can be used for reception of the primary Rx signal through the second antenna 442 without performing an operation of estimating a channel state for reception of the primary Rx signal through the second antenna 442.

According to an example, while performing Tx antenna switching, the electronic device 101 may control the second Rx circuit 434 to cause the fourth antenna 444, which is adjacent to the third antenna 443, to receive a diversity Rx signal. When the second Rx circuit 434 is in a deactivated state, the electronic device 101 may activate the second Rx circuit 434 in response to initiation of Tx antenna switching, and control the second Rx circuit 434 to cause the fourth antenna 444 to receive the primary Rx signal. Considering that the second TRx circuit 433 fails to receive a diversity Rx signal due to Tx antenna switching, the electronic device 101 may control the second Rx circuit 434 to cause the fourth antenna 444 to receive the diversity Rx signal instead, thereby reducing or eliminating a period of time (Rx blanking time) during which the reception of diversity Rx signal cannot be performed. The electronic device 101 may allow the fourth antenna 444, which is adjacent to the third antenna 443, to receive the primary Rx signal, so that a channel state for reception of the primary Rx signal through the third antenna 443 can be used for reception of the primary Rx signal through the fourth antenna 444 without performing an operation of estimating a channel state for reception of the primary Rx signal through the fourth antenna 444.

In operation 1060, the electronic device 101 may receive a diversity Rx signal through the first antenna 441 and transmit a signal and receive a primary Rx signal through the third antenna 443, when the Tx antenna switching is completed.

According to an example, the electronic device 101 may perform diversity reception via the first antenna 441 and may transmit a signal and receive a primary Rx signal via the third antenna 443, as the Tx antenna switching is completed. The electronic device 101 may determine that the Tx antenna switching has been completed, upon identifying that the amplifier of the second TRx circuit 443 is activated, and may control the first TRx circuit 441 and the second TRx circuit 443 to perform diversity reception through the first antenna 441, and to transmit a signal and receive a primary Rx signal through the third antenna 443.

An electronic device according to an embodiment may include a plurality of antennas including a first antenna, a second antenna, a third antenna, and a fourth antenna. The electronic device may include a first TRx circuit electrically connected to the first antenna. The electronic device may include a first Rx circuit electrically connected to the second antenna. The electronic device may include a second TRx circuit electrically connected to the third antenna. The electronic device may include a second Rx circuit electrically connected to the fourth antenna. The electronic device may include a memory storing a computer program including instructions. The electronic device may include at least one processor. The instructions may, when executed by the at least one processor, cause the electronic device to identify, during transmission of a signal and reception of a primary Rx signal via the first antenna and reception of a diversity Rx signal via the third antenna, the number of spatial streams in response to satisfying a condition in which Tx antenna switching using the first and third antennas is activated. The instructions may, when executed by the at least one processor, cause the electronic device to, in case that the number of spatial streams is equal to or less than a designated number, control the first Rx circuit to receive the primary Rx signal via the second antenna, and control the second Rx circuit to receive the diversity Rx signal via the fourth antenna, while performing the Tx antenna switching. The instructions may, when executed by the at least one processor, cause the electronic device to, in case that the number of spatial streams is equal to or less than a designated number, and as the Tx antenna switching is completed, control the second TRx circuit to transmit a signal and receive the primary Rx signal via the third antenna, and control the first TRx circuit to receive the diversity Rx signal via the first antenna. The instructions may, when executed by the at least one processor, cause the electronic device to, in case that the number of the spatial streams exceeds a designated number, transmit, to a base station, a signal requesting to configure the number of the spatial streams to be equal to or less than a designated number. The instructions may, when executed by the at least one processor, cause the electronic device to, in case that the number of the spatial streams exceeds a designated number and, as the number of the spatial streams is changed to be equal to or less than the designated number, control the first Rx circuit to receive the primary Rx signal via the second antenna, and control the second Rx circuit to receive the diversity Rx signal via the fourth antenna, while performing the Tx antenna switching.

In the electronic device according to an embodiment, the instructions, when executed by the at least one processor, may cause the electronic device to, as the Tx antenna switching is completed, control the second TRx circuit to transmit the signal and receive the primary Rx signal via the third antenna, and control the first TRx circuit to receive the diversity Rx signal via the first antenna.

In the electronic device according to an embodiment, the instructions, when executed by the at least one processor, may cause the electronic device to refrain from performing the Tx antenna switching, in case that the number of the spatial streams exceeds the designated number after transmitting, to the base station, the signal requesting to configure the number of the spatial streams to be equal to or less than the designated number.

In the electronic device according to an embodiment, the instructions, when executed by the at least one processor, may cause the electronic device to perform the Tx antenna switching in case that the number of the spatial streams exceeds the designated number and a specific absorption rate (SAR) of the electronic device is greater than or equal to a designated level, after transmitting, to the base station, the signal requesting to configure the number of the spatial streams to be equal to or less than the designated number.

In the electronic device according to an embodiment, the instructions, when executed by the at least one processor, may cause the electronic device to perform the Tx antenna switching in case that the number of the spatial streams exceeds the designated number and a quality of signal received from the base station is less than or equal to a designated level, after transmitting, to the base station, the signal requesting to configure the number of the spatial streams to be equal to or less than the designated number.

The electronic device according to an embodiment may further include an RF integrated circuit (RFIC) electrically connected to the first TRx circuit, the second TRx circuit, the first Rx circuit, and the second Rx circuit. The RFIC may include a first switch configured to connect one of the first TRx circuit and the first Rx circuit to one of a first transceiver chain and a second transceiver chain. The instructions may, when executed by the at least one processor, cause the electronic device to, while performing the Tx antenna switching, control the first switch to change a connection from a state in which the first TRx circuit is connected to the first transceiver chain to a state in which the first Rx circuit is connected to the first transceiver chain.

In the electronic device according to an embodiment, the RFIC may include a second switch configured to connect one of the second TRx circuit and the second Rx circuit to one of first transceiver chain and second transceiver chain. The instructions may, when executed by the at least one processor, cause the electronic device to, while performing the Tx antenna switching, control the first switch to connect the second Rx circuit to the first transceiver chain while the second TRx circuit is connected to the first transceiver chain.

In an electronic device according to an embodiment, the first and second antennas may be disposed at the top of the electronic device. The third antenna and the fourth antenna may be disposed at a lower side of the electronic device.

In a computer-readable recording medium storing instructions to be performed by an electronic device when executed by at least one processor of the electronic device, the electronic device being configured to perform Tx antenna switching using a plurality of antennas including a first antenna, a second antenna, a third antenna, and a fourth antenna, according to an embodiment, wherein the instructions may, when executed by the at least one processor, cause the electronic device to, during transmission of a signal and reception of a primary Rx signal via the first antenna and reception of a diversity Rx signal via the third antenna, identify the number of spatial streams in response to satisfying a condition in which Tx antenna switching is activated. The instructions may, when executed by the at least one processor, cause the electronic device to, in case that the number of spatial streams is equal to or less than a designated number, control the first Rx circuit electrically connected to the second antenna to receive the primary Rx signal via the second antenna and control a second Rx circuit electrically connected to the fourth antenna to receive the diversity Rx signal via the fourth antenna, while performing the Tx antenna switching. The instructions may, when executed by the at least one processor, cause the electronic device to, in case that the number of spatial streams is equal to or less than a designated number and, as the Tx antenna switching is completed, control a first TRx circuit electrically connected to the first antenna to receive the diversity Rx signal via the first antenna, and control a second TRx circuit electrically connected to the third antenna to transmit a signal and receive the primary Rx signal via the third antenna. The instructions may, when executed by the at least one processor, cause the electronic device to, in case that the number of the spatial streams exceeds a designated number, transmit, to a base station, a signal requesting to configure the number of the spatial streams to be a designated number. The instructions may, when executed by the at least one processor, cause the electronic device to, in case that the number of the spatial streams exceeds a designated number and, as the number of spatial streams of a signal received from the base station is changed to the designated number, control the first Rx circuit to receive the primary Rx signal via the second antenna and control the second Rx circuit to receive the diversity Rx signal via the fourth antenna, while performing TX antenna switching.

In the recording medium according to an example, the instructions, when executed by the at least one processor, may cause the electronic device to, as the Tx antenna switching is completed, control the second TRx circuit to transmit the signal and receive the primary Rx signal via the third antenna, and control the first TRX circuit to receive the diversity Rx signal via the first antenna.

In the recording medium according to an example, the instructions, when executed by the at least one processor, may cause the electronic device to refrain from performing the Tx antenna switching in case that the number of the spatial streams exceeds the designated number after transmitting, to the base station, the signal requesting to configure the number of the spatial streams to be the designated number.

In the recording medium according to an example, the instructions, when executed by the at least one processor, may cause the electronic device to perform the Tx antenna switching in case that the number of the spatial streams exceeds the designated number and a specific absorption rate (SAR) of the electronic device is greater than or equal to a designated level, after transmitting, to the base station, the signal requesting to configure the number of the spatial streams to be the designated number.

In the recording medium according to an example, the instructions, when executed by the at least one processor, may cause the electronic device to perform the Tx antenna switching in case that the number of the spatial streams exceeds the designated number and a quality of signal received from the base station is less than or equal to a designated level, after transmitting, to the base station, the signal requesting to configure the number of the spatial streams to be the designated number.

In the recording medium according to an example, the electronic device may further include an RF integrated circuit (RFIC) connected to the first TRx circuit, the second TRx circuit, the first Rx circuit, and the second Rx circuit. The RFIC may include a first switch configured to connect one of the first TRx circuit and the first Rx circuit to one of the first transceiver chain and the second transceiver chain. The instructions may, when executed by the at least one processor, cause the electronic device to control the first switch to connect the first Rx circuit to the first transceiver chain, while the first TRx circuit is connected to the first transceiver chain while performing the Tx antenna switching.

According to the record medium, the RFIC may include a second switch configured to connect one of the second TRx circuit and the second Rx circuit to one of the first transceiver chain and the second transceiver chain. The instructions may, when executed by the at least one processor, cause the electronic device to, during the Tx antenna switching, control the first switch to connect the second Rx circuit to the first transceiver chain, while the second TRx circuit is connected to the first transceiver chain.

An operation method of an electronic device according to an example may include, during transmission of a signal and reception of a primary Rx signal via a first antenna and reception of a diversity Rx signal via a third antenna, identifying the number of spatial streams in response to satisfying a condition in which Tx antenna switching is activated. The operation method of the electronic device may include, in case that the number of the spatial streams is less than or equal to a predetermined number, controlling a first Rx circuit electrically connected to the second antenna to receive the primary Rx signal via the second antenna, and controlling a second Rx circuit electrically connected to the fourth antenna to receive the diversity Rx signal via the fourth antenna, while performing the Tx antenna switching. The operation method of the electronic device may include, in case that the number of the spatial streams is less than or equal to the specified number as the Tx antenna switching is completed, controlling the first TRx circuit electrically connected to the first antenna to receive the diversity Rx signal via the first antenna, and controlling a second TRx circuit electrically connected to the third antenna to transmit a signal and receive the primary Rx signal via the third antenna. The operation method of the electronic device may include, in case that the number of spatial streams exceeds the specified number, transmitting, to a base station, a signal requesting to configure the number of spatial streams to be a designated number. The operation method of the electronic device may include, in case that the number of the spatial streams exceeds the designated number and, as the number of the spatial streams of a signal received from the base station has been changed to the designated number, controlling the first Rx circuit to receive the primary Rx signal via the second antenna, and controlling the second Rx circuit to receive the diversity reception signal via the fourth antenna, while performing the Tx antenna switching.

The operation method of the electronic device according to an embodiment may further include, as the Tx antenna switching is completed, controlling the second TRx circuit to transmit a signal and receives a primary Rx signal via the third antenna, and controlling the first TRx circuit to receive the diversity Rx signal via the first antenna.

The operation method of the electronic device according to an embodiment may further include refraining from performing the Tx antenna switching in case that the number of the spatial streams exceeds the designated number after transmitting, to the base station, a signal requesting to configure the number of the spatial streams to the designated number.

The operation method of the electronic device according to an embodiment may further include performing the Tx antenna switching in case that the number of the spatial streams exceeds the designated number and the specific absorption rate (SAR) of the electronic device is greater than or equal to a designated level, after transmitting, to the base station, the signal requesting to configure the number of the spatial streams to be the designated number.

The operation method of the electronic device according to an embodiment may further include performing the Tx antenna switching in case that the number of the spatial streams exceeds the designated number and the quality of a signal received from the base station is less than or equal to a designated level, after transmitting, to the base station, the signal requesting to configure the number of the spatial streams to be the designated number.

## Claims

1. An electronic device comprising:
a plurality of antennas including a first antenna, a second antenna, a third antenna, and a fourth antenna;
first TRx circuitry electrically connected to the first antenna;
first Rx circuitry electrically connected to the second antenna;
second TRx circuitry electrically connected to the third antenna;
second Rx circuitry electrically connected to the fourth antenna;
memory storing a computer program including instructions; and
at least one processor,
wherein the instructions are configured to, when executed by the at least one processor, cause the electronic device to:
while transmitting a signal and receiving a primary Rx signal via the first antenna and receiving a diversity Rx signal via the third antenna, identify the number of spatial streams in response to satisfying a condition in which Tx antenna switching using the first and third antennas is activated;
in case that the number of spatial streams is equal to or less than a designated number,
control the first Rx circuitry to receive the primary Rx signal via the second antenna and control the second Rx circuit to receive the diversity Rx signal via the fourth antenna while performing the Tx antenna switching, and
as the Tx antenna switching is completed, control the second TRx circuitry to transmit the signal and receive the primary Rx signal via the third antenna and control the first TRX circuitry to receive the diversity Rx signal via the first antenna; and
in case that the number of the spatial streams exceeds the designated number,
transmit, to a base station, a signal requesting to configure the number of the spatial streams to be equal to or less than the designated number, and
as the number of the spatial streams is changed to be equal to or less than the designated number, control the first Rx circuitry to receive the primary Rx signal via the second antenna and control the second Rx circuitry to receive the diversity Rx signal via the fourth antenna while performing the Tx antenna switching.

2. The electronic device of claim 1, wherein the instructions are configured to, when executed by the at least one processor, cause the electronic device to, as the Tx antenna switching is completed, control the second TRx circuitry to transmit a signal and receive the primary Rx signal via the third antenna and control the first TRX circuit to receive the diversity Rx signal via the first antenna.

3. The electronic device of claims 1 or 2, wherein the instructions are configured to, when executed by the at least one processor, cause the electronic device to refrain from performing the Tx antenna switching in case that the number of the spatial streams exceeds the designated number after transmitting, to the base station, the signal requesting to configure the number of the spatial streams to be equal to or less than the designated number.

4. The electronic device of claims 1 to 3, wherein the instructions are configured to, when executed by the at least one processor, cause the electronic device to perform the Tx antenna switching in case that the number of the spatial streams exceeds the designated number and a specific absorption rate (SAR) of the electronic device is greater than or equal to a designated level after transmitting, to the base station, the signal requesting to configure the number of the spatial streams to be equal to or less than the designated number.

5. The electronic device of claims 1 to 4, wherein the instructions are configured to, when executed by the at least one processor, cause the electronic device to perform the Tx antenna switching in case that the number of the spatial streams exceeds the designated number and a quality of a signal received from the base station is less than or equal to a designated level after transmitting, to the base station, the signal requesting to configure the number of the spatial streams to be equal to or less than the designated number.

6. The electronic device of claims 1 to 5, further comprising an RF integrated circuit (RFIC) electrically connected to the first TRx circuitry, the second TRx circuitry, the first Rx circuitry, and the second Rx circuitry,
wherein the RFIC comprises a first switch configured to connect one of the first TRx circuitry and the first Rx circuitry to one of a first transceiver chain and a second transceiver chain, and
wherein the instructions are configured to, when executed by the at least one processor, cause the electronic device to, while performing the Tx antenna switching, control the first switch to switch from a state in which the first TRx circuitry is connected to the first transceiver chain to a state in which the first Rx circuitry is connected to the first transceiver chain.

7. The electronic device of claims 1 to 6, wherein the RFIC comprises a second switch configured to connect one of the second TRx circuitry and the second Rx circuitry to one of first transceiver chain and second transceiver chain, and
wherein the instructions are configured to, when executed by the at least one processor, cause the electronic device to, while performing the Tx antenna switching, control the second switch to switch from a state in which the second TRx circuitry is connected to the first transceiver chain to a state in which the second Rx circuitry is connected to the first transceiver chain.

8. The electronic device of claims 1 to 7, wherein the first antenna and the second antenna are disposed at the top of the electronic device, and
wherein the third antenna and the fourth antenna are disposed at the bottom of the electronic device.

9. A computer-readable recording medium storing instructions that, when executed by at least one processor of an electronic device, cause the electronic device to perform Tx antenna switching using a plurality of antennas including a first antenna, a second antenna, a third antenna, and a fourth antenna,
wherein the instructions, when executed by the at least one processor, cause the electronic device to:
while transmitting a signal and receiving a primary Rx signal via the first antenna and receiving a diversity Rx signal via the third antenna, identify the number of spatial streams in response to satisfying a condition in which Tx antenna switching is activated;
in case that the number of spatial streams is equal to or less than a designated number,
control first Rx circuitry electrically connected to the second antenna to receive the primary Rx signal via the second antenna and control second Rx circuitry electrically connected to the fourth antenna to receive the diversity Rx signal via the fourth antenna while performing the Tx antenna switching, and
as the Tx antenna switching is completed, control first TRx circuitry electrically connected to the first antenna to receive the diversity Rx signal via the first antenna and control second TRx circuitry electrically connected to the third antenna to transmit the signal and receive the primary Rx signal via the third antenna; and
in case that the number of the spatial streams exceeds the designated number,
transmit, to a base station, a signal requesting to configure the number of the spatial streams to be the designated number, and
as the number of spatial streams of a signal received from the base station is changed to the designated number, control the first Rx circuitry to receive the primary Rx signal via the second antenna and control the second Rx circuitry to receive the diversity Rx signal via the fourth antenna while performing the TX antenna switching.

10. The recording medium of claim 9, wherein the instructions are configured to, when executed by the at least one processor, cause the electronic device to, as the Tx antenna switching is completed, control the second TRx circuitry to transmit the signal and receive the primary Rx signal via the third antenna and control the first TRX circuitry to receive the diversity Rx signal via the first antenna.

11. The recording medium of claims 9 or 10, wherein the instructions are configured to, when executed by the at least one processor, cause the electronic device to refrain from performing the Tx antenna switching in case that the number of the spatial streams exceeds a designated number after transmitting, to the base station, a signal requesting to configure the number of the spatial streams to be the designated number.

12. The recording medium of claims 9 to 11, wherein the instructions are configured to, when executed by the at least one processor, cause the electronic device to perform the Tx antenna switching in case that the number of the spatial streams exceeds the designated number and a specific absorption rate (SAR) of the electronic device is greater than or equal to a designated level after transmitting, to the base station, the signal requesting to configure the number of the spatial streams to be the designated number.

13. The recording medium of claims 9 to 12, wherein the instructions are configured to, when executed by the at least one processor, cause the electronic device to perform the Tx antenna switching in case that the number of the spatial streams exceeds the designated number and a quality of a signal received from the base station is less than or equal to a designated level after transmitting, to the base station, a signal requesting to configure the number of the spatial streams to be the designated number.

14. The recording medium of claims 9 to 13, wherein the electronic device further comprises an RF integrated circuit (RFIC) connected to the first TRx circuitry, the second TRx circuitry, the first Rx circuitry, and the second Rx circuitry,
wherein the RFIC comprises a first switch configured to connect one of the first TRx circuitry and the first Rx circuitry to one of a first transceiver chain and a second transceiver chain; anda second switch configured to connect one of the second TRx circuitry and the second Rx circuitry to one of the first transceiver chain and the second transceiver chain, and
wherein the instructions are configured to, when executed by the at least one processor, cause the electronic device to, while performing the Tx antenna switching, control the first switch to switch from a state in which the first TRx circuitry is connected to the first transceiver chain to a state in which the first Rx circuitry is connected to the first transceiver chain and control the second switch to switch from a state in which the second TRx circuitry is connected to the first transceiver chain to a state in which the second Rx circuitry is connected to the first transceiver chain.

15. An operation method of an electronic device, the operation method comprising:
while transmitting a signal and receiving a primary Rx signal via a first antenna and receiving a diversity Rx signal via a third antenna, identifying the number of spatial streams in response to satisfying a condition in which Tx antenna switching is activated;
in case that the number of spatial streams is equal to or less than a designated number,
controlling first Rx circuitry electrically connected to a second antenna to receive the primary Rx signal via the second antenna and controlling second Rx circuitry electrically connected to a fourth antenna to receive the diversity Rx signal via the fourth antenna while performing the Tx antenna switching, and
as the Tx antenna switching is completed, controlling first TRx circuitry electrically connected to the first antenna to receive the diversity Rx signal via the first antenna and controlling second TRx circuitry electrically connected to the third antenna to transmit the signal and receive the primary Rx signal via the third antenna; and
in case that the number of the spatial streams exceeds a designated number,
transmitting, to a base station, a signal requesting to configure the number of the spatial streams to be a designated number, and
as the number of spatial streams of a signal received from the base station is changed to the designated number, controlling the first Rx circuitry to receive the primary Rx signal via the second antenna and controlling the second Rx circuitry to receive the diversity Rx signal via the fourth antenna while performing the TX antenna switching.
